# EUROPÄISCHE PATENTSCHRIFT

(11) **EP 4 555 288 B1**
(45) Veröffentlichungstag und Bekanntmachung des Hinweises auf die Patenterteilung: **11.11.2026**
(21) Anmeldenummer: 23734294.4
(22) Anmeldetag: 26.06.2023
(51) Int. Cl.: G01K 1/14, B60J 1/00, G01K 7/16, G01K 13/10, G02F 1/163, H01B 7/08, G01K 3/00, B32B 17/00, E06B 9/24, B32B 3/02, B32B 3/08, B32B 7/12, B32B 17/10, B32B 27/08, B32B 27/30, B32B 27/40, B32B 27/36, E06B 3/00, H01B 7/32

(54) **FLACHBANDKABEL MIT TEMPERATURSENSOR UND VERFAHREN**
FLAT RIBBON CABLE WITH TEMPERATURE SENSOR AND METHOD
CÂBLE RUBAN POURVU DE CAPTEUR DE TEMPÉRATURE ET PROCÉDÉ

(30) Priorität: 14.07.2022 EP 22184868
(43) Veröffentlichungstag der Anmeldung: 21.05.2025
(73) Patentinhaber: Saint-Gobain Sekurit France, 60150 Thourotte (FR)
(72) Erfinder: REUL, Bernhard, 52134 Herzogenrath (DE); HERMANGE, Francois, 52134 Herzogenrath (DE); RASTEGAR, Hadi, 52134 Herzogenrath (DE)
(74) Vertreter: Gebauer, Dieter Edmund
(86) Internationale Anmeldenummer: PCT/EP2023/067262
(87) Internationale Veröffentlichungsnummer: WO 2024/012857

(56) Entgegenhaltungen:
- DE-U1- 202020 005 499
- DE-U1- 202021 105 230

## Beschreibung

Die Erfindung betrifft ein Flachbandkabel mit Temperatursensor sowie ein Verfahren zur Temperaturmessung sowie der Verwendung eines erfindungsgemäßen Flachbandkabels.

Verglasungen in Gebäuden und Fahrzeugen werden zunehmend mit großflächigen, elektrisch leitfähigen und für sichtbares Licht transparenten Funktionsschichten versehen. Insbesondere werden aus Gründen der Energieeinsparung und des Komforts an Verglasungen hohe Anforderungen bezüglich ihrer wärmeisolierenden Eigenschaften gestellt. So ist es wünschenswert, einen hohen Wärmeeintrag durch Sonnenstrahlung zu vermeiden, was zu einem übermäßigen Aufheizen des Innenraums führt und wiederum hohe Energiekosten für die notwendige Klimatisierung zur Folge hat. Abhilfe schaffen Schichtensysteme, bei denen die Lichtdurchlässigkeit und damit der Wärmeeintrag aufgrund Sonnenlichts durch Anlegen einer elektrischen Spannung gesteuert werden kann. Elektrochrome Schichtensysteme sind beispielsweise aus EP 0867752 A1, US 2007/0097481 A1 und US 2008/0169185 A1 bekannt. Derartige Schichtensysteme werden üblicherweise durch externe Schalter geschaltet, die sich im Umfeld der Verglasung befinden. Eine andere Funktion elektrischer Funktionsschichten zielt darauf ab, das Sichtfeld einer Fahrzeugscheibe frei von Eis und Beschlag zu halten. Bekannt sind elektrische Heizschichten (siehe z.B. WO 2010/043598 A1), die durch Anlegen einer elektrischen Spannung eine gezielte Erwärmung der Scheibe bewirken. Die Spannung, die an der elektrischen Heizschicht anliegt, wird in aller Regel durch externe Schalter gesteuert, die bei Fahrzeugen beispielsweise in einem Armaturenbrett integriert sind. Beispielsweise aus DE 10106125 A1, DE 10319606 A1, EP 0720249 A2, US 2003/0112190 A1 und DE 198 43 338 C2 ist bekannt, eine elektrische Funktionsschicht als Flächenantenne einzusetzen. Dazu wird die Funktionsschicht mit einer Koppelelektrode galvanisch oder kapazitiv gekoppelt und das Antennensignal im Randbereich der Scheibe zur Verfügung gestellt. Das von der Flächenantenne ausgekoppelte Antennensignal wird einem Antennenverstärker zugeführt, der in Kraftfahrzeugen mit der metallischen Karosserie verbunden ist, wodurch ein hochfrequenztechnisch wirksames Bezugspotenzial für das Antennensignal vorgegeben wird.

Solche Verbundscheiben bestehen in der Regel aus mindestens zwei starren Einzelglasscheiben, die durch eine thermoplastische Klebeschicht flächig-adhäsiv miteinander verbunden sind. Die elektrische Funktionsschicht befindet sich zwischen den Einzelglasscheiben und ist typischer Weise über einen Flachleiter mit der äußeren Umgebung elektrisch verbunden. Der Grund hierfür ist, dass geeignete Flachleiter in aller Regel eine Gesamtdicke von maximal 0,3 mm aufweisen. Derart dünne Flachleiter können ohne Schwierigkeiten zwischen den Einzelglasscheiben in der thermoplastischen Klebeschicht eingebettet werden. Beispiele für Flachleiter zur Kontaktierung von elektrischen Funktionsschichten in Verbundscheiben im Fahrzeugbereich finden sich in DE 20 2021 105 230 U1, DE 42 35 063 A1, DE 20 2004 019 286 U1, der EP 2 695 233 B1 oder DE 93 13 394 U1.

Bekannt ist auch die Verwendung von Flachleitern bei Verbundscheiben mit elektrischen Funktionselementen in Form von elektrooptischen Komponenten. Derartige Verbundscheiben werden oftmals auch als aktiver Verglasungen bezeichnet. Bei den elektrooptischen Komponenten handelt es sich um flächenhafte Strukturen mit elektrisch regelbaren optischen Eigenschaften einer aktiven Schicht. Das heißt, die optischen Eigenschaften der aktiven Schicht und insbesondere deren Transparenz, Streuverhalten oder Leuchtkraft sind durch eine elektrische Spannung steuerbar. Beispiele für elektrooptische Komponenten sind elektrochrome Elemente, SPD-Elemente (SPD = Suspended Particle Device), die beispielsweise aus EP 0876608 B1 und WO 2011033313 A1 bekannt sind, PDLC-Elemente (PDLC = Polymer Dispersed Liquid Crystal), die beispielsweise aus DE 10 2008 026 339 A1 oder DE 20 2020 005 499 U1 bekannt sind und Elemente auf Basis von Guest-Host-Zellen.

Die elektrische Kontaktierung von elektrischen Funktionselementen und elektrooptischen Komponenten erfolgt üblicherweise durch Sammelleiter ("Busbars"), die im Randbereich der Funktionsschicht bzw. der elektrooptischen Komponente aufgebracht sind und diese elektrisch leitend kontaktieren. Durch Verbinden der Sammelleiter mit einer externen Spannungsquelle, typischer Weise über an den Sammelleitern angebrachte Flachleiter, wird eine Spannung angelegt und die Funktionsschicht bzw. elektrooptische Komponente geschaltet.

In der Praxis werden für komplexere Steueraufgaben Flachbandkabel eingesetzt, die mit einer Mehrzahl elektrischer Leiterbahnen versehen sind. Die elektrischen Leiterbahnen sind sehr dünn mit Dicken beispielsweise im Bereich von 0,03 mm bis 0,1 mm und bestehen beispielsweise aus Kupfer, das sich bewährt hat, da es eine gute elektrische Leitfähigkeit sowie eine gute Verarbeitbarkeit besitzt und die Materialkosten gleichzeitig niedrig sind. Die elektrischen Leiterbahnen sind typischerweise auf elektrisch isolierenden, polymeren Trägerfolien angeordnet und von elektrisch isolierenden, polymeren Deckfolien bedeckt.

Derart dünne elektrische Leiterbahnen, insbesondere, wenn sie abschnittsweise in eine Verbundscheibe einlaminiert sind, sind empfindlich gegenüber Beschädigungen, beispielsweise durch Biegung über eine scharfe Kante oder Korrosion.

Elektrische Funktionselemente sind oftmals sehr temperaturempfindlich. Insbesondere elektrische Funktionselemente mit elektrisch steuerbaren optischen Eigenschaften ändern ihre optischen Eigenschaften mit in der Regel ansteigender Temperatur bis hin zur dauerhaften Zerstörung ihrer Eigenschaften.

Demgegenüber besteht die Aufgabe der vorliegenden Erfindung darin, ein Flachbandkabel mit Temperatursensor bereitzustellen, welches dennoch kostengünstig herzustellen, einfach in der Handhabung ist und sich gut in eine Verbundscheibe einlaminieren lässt.

Ein Ausführungsbeispiel der Erfindung betrifft eine verbesserte Anschlussanordnung mit einer Verbundscheibe und einem, ein elektrisches Funktionselement der Verbundscheibe elektrisch kontaktierendes, Flachbandkabel mit Temperatursensor bereitzustellen, das eine flexible elektrische Kontaktierung des Flachbandkabels außerhalb der Verbundscheibe und eine punktuelle oder kontinuierliche Messung der Temperatur des elektrischen Funktionselements in der Verbundscheibe ermöglicht.

Diese und weitere Aufgaben werden nach dem Vorschlag der Erfindung durch ein Flachbandkabel gemäß dem unabhängigen Patentanspruch 1 gelöst. Bevorzugte Ausführungsformen sowie eine Anschlussanordnung mit Flachbandkabel sowie ein Steuerungssystem gehen aus den Unteransprüchen hervor. Ein erfindungsgemäßes Verfahren und eine Verwendung des erfindungsgemäßen Flachbandkabels sowie der Anschlussanordnung gehen aus den unabhängigen Ansprüchen 13, 16 und 17 hervor.

Die Erfindung betrifft ein Flachbandkabel, mindestens umfassend:
eine Trägerfolie mit mindestens einer, bevorzugt mindestens zwei, elektrischen Leiterbahnen, wobei die Trägerfolie an mindestens einem ersten Ende einen ersten Anschlussbereich und an mindestens einem zweiten Ende einen zweiten Anschlussbereich aufweist, und
wobei die Trägerfolie einen Temperatursensor und zwei Zusatzleiterbahnen aufweist und die zwei Zusatzleiterbahnen den Temperatursensors elektrisch kontaktieren, so dass ein ohmscher Widerstand zwischen den beiden Enden der Zusatzleiterbahnen messbar ist.

Das heißt, dass jeweils ein Ende einer Zusatzleiterbahn mit einem der zwei Anschlüsse des Temperatursensors elektrisch verbunden ist, so dass zwischen den jeweiligen anderen Enden der Zusatzleiterbahnen der ohmsche Widerstand messbar ist.

Vorteilhafterweise ist der Anschluss des Temperatursensors über eine Lötverbindung oder eine Klebeverbindung mit einem elektrisch leitenden Kleber mit der jeweiligen Zusatzleiterbahn verbunden. Dies sorgt für eine besonders gute und beständige elektrische Leitungsverbindung unter den Bedingungen der jeweiligen Verwendung des erfindungsgemäßen Flachbandkabels.

Bei dem erfindungsgemäßen Flachbandkabel ist der erste Anschlussbereich zwischen zwei Scheiben einer Verbundscheibe anordenbar und der zweite Anschlussbereich zwischen den beiden Scheiben aus der Verbundscheibe herausführbar und die elektrische Leiterbahn kann im ersten Anschlussbereich ein elektrisches Funktionselement elektrisch kontaktieren. In einer weiteren vorteilhaften Ausgestaltung eines erfindungsgemäßen Flachbandkabels ist der Temperatursensor am ersten Anschlussbereich der Trägerfolie angeordnet.

In einer weiteren vorteilhaften Ausgestaltung eines erfindungsgemäßen Flachbandkabels sind die Zusatzleiterbahnen und/oder der Temperatursensor im Randbereich der Trägerfolie angeordnet. Bevorzugt beträgt der Abstand zwischen den Zusatzleiterbahnen und/oder dem Temperatursensor und dem Rand der Trägerfolie weniger als 5 mm, besonders bevorzugt gleich oder weniger als 3 mm.

In einer weiteren vorteilhaften Ausgestaltung eines erfindungsgemäßen Flachbandkabels sind die erste Zusatzleiterbahn, der Temperatursensor und die zweite Zusatzleiterbahn schleifenförmig und bevorzugt im Wesentlichen U-förmig um den ersten Anschlussbereich herumgeführt.

In einer weiteren vorteilhaften Ausgestaltung eines erfindungsgemäßen Flachbandkabels sind mindestens eine elektrische Leiterbahn und mindestens eine Zusatzleiterbahn in einer Ebene nebeneinander oder in mindestens zwei, bevorzugt in genau zwei oder genau drei oder genau vier, Ebenen übereinander angeordnet.

In einer weiteren vorteilhaften Ausgestaltung eines erfindungsgemäßen Flachbandkabels sind mindestens eine elektrische Leiterbahn und beide Zusatzleiterbahnen in einer Ebene nebeneinander oder in mindestens zwei, bevorzugt in genau zwei oder genau drei oder genau vier, Ebenen übereinander angeordnet.

In einer weiteren vorteilhaften Ausgestaltung eines erfindungsgemäßen Flachbandkabels ist mindestens eine elektrische Leiterbahn auf einer ersten Oberfläche einer elektrisch isolierenden Trägerfolie und mindestens eine weitere Leiterbahn und/oder die Zusatzleiterbahnen auf der zweiten Oberfläche der Trägerfolie angeordnet.

In einer weiteren vorteilhaften Ausgestaltung eines erfindungsgemäßen Flachbandkabels sind die mindestens eine elektrische Leiterbahn und die Zusatzleiterbahnen, sowie bevorzugt der Temperatursensor, mit der ersten bzw. zweiten Oberfläche der Trägerfolie fest verbunden. Bevorzugt sind die mindestens eine elektrische Leiterbahn und die Zusatzleiterbahnen, sowie besonders bevorzugt der Temperatursensor, mit der ersten bzw. zweiten Oberfläche der Trägerfolie verklebt, bevorzugt über Klebeschichten. Alternativ kann der Temperatursensor lediglich über die elektrische Leitungsverbindung zur Zusatzleiterbahn, beispielsweise eine Lötverbindung, an der Trägerfolie befestigt sein.

In einer weiteren vorteilhaften Ausgestaltung eines erfindungsgemäßen Flachbandkabels ist der Temperatursensor ein Widerstandselement oder Widerstandsthermometer, bevorzugt ein Messwiderstand oder ein Thermistor (also ein elektrischer Widerstand, dessen Wert sich mit der Temperatur reproduzierbar ändert). Besonders bevorzugt ist der Temperatursensor ein Platin-Widerstand, ein Nickel-Widerstand, ein Heißleiter-Bauelement (Thermistor mit negativen Temperaturkoeffizienten (NTC), auch NTC-Thermistor genannt) oder ein Kaltleiter-Bauelement (Thermistor mit positiven Temperaturkoeffizienten (PTC), auch PTC-Thermistor genannt). Derartige Temperatursensoren enthalten beispielsweise eine Schicht aus einem reinen Metall wie Platin oder Nickel, oder eine Keramik (gesintertes Metalloxid) oder einen Halbleiter oder bestehen daraus.

Besonders vorteilhaft ist ein Temperatursensor aus einem NTC-Thermistor mit einem ohmschen Widerstandswert bei einer Temperatur T von 25°C von 1 kOhm bis 100 kOhm und insbesondere von 5 kOhm bis 20 kOhm und beispielsweise 10 kOhm.

In einer weiteren vorteilhaften Ausgestaltung eines erfindungsgemäßen Flachbandkabels weist der Temperatursensor einen Messbereich von -40°C bis +150°C auf.

In einer weiteren vorteilhaften Ausgestaltung eines erfindungsgemäßen Flachbandkabels weist die Trägerfolie jeweils einen Einschnitt oder eine Ausnehmung auf beiden Seiten des Temperatursensors auf, welche sich vom Rand der Trägerfolie bevorzugt im Wesentlichen geradlinig und besonders bevorzugt unter einem Winkel von 90° ins Innere der Trägerfolie erstreckt. Dazu sind die Zusatzleiterbahnen bevorzugt schleifenförmig um die Einschnitte oder Ausnehmungen herumgeführt. Die Länge der Einschnitte beträgt bevorzugt mindestens 3 mm bis 100 mm, besonders bevorzugt von 4 mm bis 20 mm und insbesondere von 6 mm bis 10 mm. Die Breite der Einschnitte beträgt bevorzugt von 0,1 mm bis 10 mm, besonders bevorzugt von 0,3 mm bis 2 mm und insbesondere von 0,3 mm bis 0,7 mm. Durch die Einschnitte oder Ausnehmungen ist der Abschnitt mit dem Temperatursensor besonders flexibel. Dies hat den besonderen Vorteil, dass sich der im Vergleich zum übrigen Anschlussbereich üblicherweise dickere Temperatursensor bei der Lamination in eine Verbundscheibe besonders gut und spannungsarm einbringen lässt.

Eine Ausführungsform der Erfindung betrifft eine Anschlussanordnung mit einer Verbundscheibe und einem erfindungsgemäßen Flachbandkabel, mindestens umfassend:
- eine Verbundscheibe aus einer ersten Scheibe und einer zweiten Scheibe, die über mindestens eine thermoplastische Zwischenschicht flächenmäßig miteinander verbunden sind,
- ein elektrisches Funktionselement zwischen den beiden Scheiben,
- ein erfindungsgemäßes Flachbandkabel mit mindestens einer elektrischen Leiterbahn, einem Temperatursensor und mindestens zwei Zusatzleiterbahnen, wobei das Flachbandkabel an einem ersten Ende einen ersten Anschlussbereich und an einem zweiten Ende einen zweiten Anschlussbereich aufweist, wobei der erste Anschlussbereich zwischen den beiden Scheiben angeordnet und der zweite Anschlussbereich zwischen den beiden Scheiben aus der Verbundscheibe herausgeführt ist, und wobei die elektrischen Leiterbahnen im ersten Anschlussbereich das elektrische Funktionselement elektrisch kontaktieren.

Die Anschlussanordnung umfasst also eine Verbundscheibe aus einer ersten Scheibe und einer zweiten Scheibe, die über eine thermoplastische Zwischenschicht flächenmäßig fest miteinander verbunden sind.

Die Anschlussanordnung umfasst weiterhin ein elektrisches Funktionselement, das zwischen den beiden Scheiben angeordnet ist, sowie ein Flachbandkabel, das der elektrischen Kontaktierung des elektrischen Funktionselements dient, insbesondere zum elektrischen Anschluss des Funktionselements an eine elektrische Steuereinheit. Das Flachbandkabel weist einen ersten Anschlussbereich und einen zweiten Anschlussbereich auf, wobei sich entlang einer Erstreckungsrichtung des Flachbandkabels der erste Anschlussbereich an einem ersten Ende und der zweite Anschlussbereich an einem zweiten Ende des Flachbandkabels befinden. Das Flachbandkabel ist in die Verbundscheibe teilweise einlaminiert, wobei sich das erste Ende mit dem ersten Anschlussbereich zwischen den beiden Scheiben befindet und das zweite Ende mit dem zweiten Anschlussbereich zwischen den beiden Scheiben aus der Verbundscheibe herausgeführt ist und sich außerhalb der Verbundscheibe befindet. Hierbei stehen die elektrischen Leiterbahnen im ersten Anschlussbereich mit dem elektrischen Funktionselement in elektrischen Kontakt und sind mit diesen bevorzugt galvanisch verbunden.

Allgemein ist das Flachbandkabel ein flächiger Körper mit zwei gegenüberliegenden Seiten, der wahlweise in eine ebene oder gekrümmte Form gebracht werden kann. Im ebenen (d.h. nichtgekrümmten) Zustand ist der Flachleiter in einer Ebene angeordnet. Das Flachbandkabel ist generell länglich ausgebildet und weist entlang seiner Erstreckungsrichtung zwei Enden auf.

Eine vorteilhafte Ausgestaltung eines erfindungsgemäßen Flachbandkabels umfasst mindestens zwei elektrische Leiterbahnen, wobei die elektrischen Leiterbahnen zumindest abschnittsweise nebeneinander liegend oder übereinander angeordnet sind.

In einer weiteren vorteilhaften Ausgestaltung der Erfindung sind mindestens zwei elektrische Leiterbahnen in mindestens zwei, bevorzugt in genau zwei oder genau drei oder genau vier, Ebenen übereinander angeordnet. Übereinander bedeutet hier bezüglich der Erstreckungsebene des Flachbandkabels, d.h. bezüglich der Ebene die durch die zwei größeren Dimensionen des Flachbandkabels aufgespannt werden. Vorteilhafterweise sind jeweils mindestens zwei Leiterbahnen in der Projektion orthogonal zur Erstreckungsebene deckungsgleich angeordnet. Alternativ kann auch die Leiterbahn in einer Ebene größer ausgebildet sein und im Wesentlichen die Ebene innerhalb des Flachbandkabels, bevorzugt abzüglich eines isolierenden Randbereichs, teilweise oder vollständig einnehmen. Dadurch wird die Stromtragfähigkeit dieser Leiterbahn erhöht.

In einer vorteilhaften Ausgestaltung eines erfindungsgemäßen Flachbandkabels ist mindestens eine elektrische Leiterbahn auf einer ersten Oberfläche einer elektrisch isolierenden Trägerfolie und mindestens eine weitere Leiterbahn auf der zweiten Oberfläche (d.h. der der ersten Oberfläche bezüglich der Trägerfolie gegenüberliegenden Oberfläche) der Trägerfolie angeordnet.

In einer weiteren vorteilhaften Ausgestaltung eines erfindungsgemäßen Flachbandkabels sind die elektrischen Leiterbahnen mit der ersten bzw. zweiten Oberfläche der Trägerfolie fest verbunden. Bevorzugt sind die elektrischen Leiterbahnen mit der ersten bzw. zweiten Oberfläche der Trägerfolie verklebt, insbesondere über Klebeschichten. Alternativ kann die Trägerfolie mit den elektrischen Leiterbahnen beschichtet sein, insbesondere im Druckverfahren, beispielsweise Siebdruckverfahren.

In einer weiteren vorteilhaften Ausgestaltung eines erfindungsgemäßen Flachbandkabels weist das Flachbandkabel zwischen den Leiterbahnen einer Ebene, isolierende Bereiche, bevorzugt bestehend aus Abschnitten einer Isolationsfolie, auf. Vorteilhafterweise sind auch am Rand des Flachbandleiters jeweils Abschnitte einer Isolationsfolie angeordnet.

In einer weiteren vorteilhaften Ausgestaltung eines erfindungsgemäßen Flachbandkabels weisen die Leiterbahnen an ihren der Trägerfolie abgewandten Flächen mindestens eine elektrisch isolierende Deckfolie auf. Bevorzugt sind die Leiterbahnen bzw. die Abschnitte einer Isolationsfolie mit der Deckfolie fest verbunden. Besonders bevorzugt sind die Leiterbahnen bzw. die Abschnitte einer Isolationsfolie mit der Deckfolie verklebt, insbesondere über Klebeschichten. Die Trägerfolie und die Deckfolie formen gemeinsam eine Isolationshülle, welche die elektrischen Leiterbahnen umhüllt.

Die Breite des Flachbandkabels kann konstant sein oder variieren. Insbesondere kann das Flachbandkabel im ersten Anschlussbereich und/oder zweiten Anschlussbereich verbreitert sein.

In einer weiteren vorteilhaften Ausgestaltung eines erfindungsgemäßen Flachbandkabels beträgt die maximale Breite bF des Flachbandkabels, bevorzugt innerhalb der Verbundscheibe und/oder an der Austrittsstelle aus der Verbundscheibe, von 6 mm bis 40 mm, bevorzugt von 20 mm bis 40 mm und insbesondere von 25 mm bis 30 mm. In einer weiteren vorteilhaften Ausgestaltung eines erfindungsgemäßen Flachbandkabels beträgt die maximale Dicke dF des Flachbandkabels, bevorzugt innerhalb der Verbundscheibe und/oder an der Austrittsstelle aus der Verbundscheibe, von 150 µm bis 600 µm, bevorzugt von 300 µm bis 400 µm und insbesondere von 300 µm bis 350 µm. Flachbandkabel mit derartigen maximalen Dimensionen, insbesondere innerhalb der Verbundscheibe und/oder an der Austrittsstelle aus der Verbundscheibe, lassen sich besonders gut einlamineren oder die Stabilität der Verbundscheibe zu beeinträchtigen oder deren optisches Erscheinungsbild zu stören.

In einer vorteilhaften Ausgestaltung des Flachbandkabels weist dieses eine Länge von 5 cm bis 150 cm, bevorzugt von 10 cm bis 100 cm und insbesondere von 50 cm bis 90 cm auf. Es versteht sich, dass die Länge, Breite und Dicke des Flachbandkabels an die Anforderungen des jeweiligen Einzelfalls angepasst werden können. Die Richtung der Länge definiert die Erstreckungsrichtung des Flachbandkabels.

Die Trägerfolie, die Deckfolie und/oder die Isolationsfolie enthalten bevorzugt Polyimid oder Polyesther, besonders bevorzugt Polyethylenterephtalat (PET) oder Polyethylennapthalat (PEN) oder besteht daraus. Die Deckfolie und/oder die Isolationsfolie können auch aus einem elektrisch isolierenden Lack, bevorzugt einem Polymerlack, bestehen. Die Deckfolie und/oder die Isolationsfolie können auch thermoplastische Kunststoffe und Elastomere wie Polyamid, Polyoxymethylen, Polybutylenterephthalat oder Ethylen-Propylen-Dien-Kautschuk enthalten oder daraus bestehen. Alternativ können Vergusswerkstoffe wie Acrylat- oder Epoxidharzsysteme als Deckfolie und/oder Isolationsfolie verwendet werden.

Die Trägerfolie, die Deckfolie und/oder die Isolationsfolie weisen bevorzugt eine Dicke von 10 µm bis 300 µm, besonders bevorzugt von 25 µm bis 200 µm und insbesondere von 60 µm bis 150 µm auf. Die Trägerfolie, die Deckfolie und/oder die Isolationsfolie sind beispielsweise über eine Klebstoffschicht mit den Leiterbahnen verklebt. Die Dicke der Klebstoffschicht beträgt beispielsweise von 10 µm bis 150 µm und besonders bevorzugt von 50 µm bis 75 µm. Derartige Trägerfolien, Deckfolien und/oder Isolationsfolien sind besonders dazu geeignet, die Leiterbahnen elektrisch zu isolieren und mechanisch zu stabilisieren sowie vor mechanischen Beschädigungen und Korrosion zu schützen.

Die elektrischen Leiterbahnen und/oder die Zusatzleiterbahnen des Flachbandkabels enthalten oder bestehen vorzugsweise aus einem metallischen Material, beispielsweise Kupfer, Aluminium, Edelstahl, Zinn, Gold, Silber oder Legierungen hieraus. Werden die elektrischen Leiterbahnen als Streifen aus einer Metallfolie hergestellt, kann das Metall abschnittsweise oder vollständig verzinnt sein. Dies ist besonders vorteilhaft, um eine gute Lötbarkeit bei gleichzeitigem Korrosionsschutz zu erzielen. Zudem wird die Kontaktierung mit einem elektrisch leitfähigen Klebstoff verbessert.

Gemäß einer Ausgestaltung weisen die elektrischen Leiterbahnen und/oder die Zusatzleiterbahn eine Dicke dL von 10 µm bis 300 µm, bevorzugt von 10 µm bis 150 µm, besonders bevorzugt von 30 µm bis 250 µm und insbesondere von 50 µm bis 150 µm auf. Derart dünne Leiter sind besonders flexibel und können beispielsweise gut in Verbundscheiben einlaminiert und aus diesen herausgeführt werden. Gemäß einer Ausgestaltung weisen die elektrischen Leiterbahnen und/oder die Zusatzleiterbahn eine Breite bL von 0,05 mm bis 40 mm, bevorzugt von 1 mm bis 20 mm und insbesondere von 2 mm bis 5 mm auf. Derartige Breiten sind besonders geeignet, um in Verbindung mit den oben genannten Dicken eine ausreichende Stromtragefähigkeit zu erzielen.

Derartige Flachbandkabel sind derart dünn, dass sie ohne Schwierigkeiten zwischen den einzelnen Scheiben in der thermoplastischen Zwischenschicht einer Verbundscheibe eingebettet und aus dieser herausgeführt werden können. Das Flachbandkabel eignet sich somit besonders zur Kontaktierung von elektrischen Funktionselementen in Verbundscheiben.

Jede elektrische Leiterbahn kann an zwei entlang der Leiterbahn voneinander beabstandeten Kontaktstellen elektrisch kontaktiert werden. Die Kontaktstellen sind Bereiche der Leiterbahnen, an denen eine elektrische Kontaktierung möglich ist. In der einfachsten Ausgestaltung handelt es sich hierbei um zugängliche Bereiche der elektrischen Leiterbahnen. Der erste Anschlussbereich weist eine Kontaktstelle mindestens einer der elektrischen Leiterbahnen auf. Der zweite Anschlussbereich befindet sich typischer Weise, jedoch nicht zwingend, auf derselben Seite wie der erste Anschlussbereich des Flachbandkabels. Der mindestens eine zweite Anschlussbereich weist eine Kontaktstelle mindestens einer der elektrischen Leiterbahnen auf. Die Anschlussbereiche des Flachbandkabels dienen zum elektrischen Kontaktieren der Leiterbahnen, zu welchem Zweck eine etwaige Deckfolie und ggf. Isolationsfolie oder Trägerfolie zumindest an den Kontaktstellen nicht vorhanden oder entfernt ist, so dass die Leiterbahnen zugänglich sind.

Es versteht sich, dass die Anschlussbereiche durch eine elektrisch leitfähige Beschichtung, wie eine Verzinnung, oder eine elektrisch nicht leitfähige Schicht, wie ein Lötlack, vor Korrosion geschützt sein können. Diese Schutzschicht wird üblicherweise erst bei der elektrischen Kontaktierung entfernt, verbrannt oder anderweitig durchdrungen, um einen elektrischen Kontakt zu ermöglichen. Isolationsfreie Anschlussbereiche lassen sich durch Fenstertechniken bei der Herstellung oder durch nachträgliches Entfernen, beispielsweise durch Laserablation oder mechanisches Abtragen, herstellen. Bei der Fenstertechnik werden die Leiterbahnen auf eine Trägerfolie durch eine Deckfolie mit entsprechenden Ausnehmungen (Fenstern) in den Anschlussbereichen beschichtet, beispielsweise beklebt oder laminiert. Alternativ werden die Leiterbahnen beidseitig laminiert, wobei eine Deckfolie entsprechende Ausnehmungen in den Anschlussbereichen aufweist. Beim nachträglichen Entfernen können entsprechende Ausnehmungen in den Anschlussbereichen in die Deckfolie eingebracht werden, wenn die Leiterbahnen auf eine Trägerfolie aufgebracht wurden. Bei laminierten Flachbandkabeln können Ausnehmungen in den Anschlussbereichen in eine Deckfolie und ggf. die Trägerfolie eingebracht werden. Möglich ist jedoch auch, dass das Flachbandkabel im ersten Anschlussbereich und im zweiten Anschlussbereich jeweils eine oder mehrere Durchbrechungen der Deckfolie und ggf. der Trägerfolie aufweist. Jede Durchbrechung erstreckt sich dabei vollständig auf die Leiterbahn, d.h. sie bildet einen materialfreien Durchgang auf die Leiterbahn.

Die Anschlussbereiche sind ihrer jeweiligen Verwendung nach ausgebildet. In einer vorteilhaften Ausgestaltung sind die Kontaktstellen als Lötkontaktstellen ausgebildet. Die elektrische Leitungsverbindung zwischen den Anschlussbereichen des Flachbandkabels und dem elektrischen Funktionselement sowie dem mindestens einen Verbindungsbereich erfolgt vorzugsweise durch Löten, Bonden, Schweißen, Klemmen, Quetschen oder Stecken. Beim Löten wird ein Weichlöten mit einem niedrigschmelzenden Lot bevorzugt. Alternativ kann die elektrisch leitfähige Verbindung durch Kleben mit einem elektrisch leitfähigen Kleber oder Klemmen erfolgen, beispielsweise mittels einer metallischen Klammer, Hülse oder Steckverbindung. Im Inneren der Verbundscheibe kann die elektrische Leitungsverbindung auch durch eine unmittelbare Berührung der elektrisch leitfähigen Bereiche erfolgen, wobei diese Anordnung fest in der Verbundscheibe einlaminiert ist und dadurch gegen Verrutschen gesichert ist.

Vorteilhaft ist das Flachbandkabel im ersten oder zweiten Anschlussbereich mit einem Elektrodenfeld versehen, das eine Vielzahl von Einzelelektroden umfasst, die mit den Leiterbahnen elektrisch verbunden sind. Dies ermöglicht eine einfache elektrische Kontaktierung des elektrischen Funktionselements zu dessen spezifischen Steuerung/Regelung.

In einer vorteilhaften Ausgestaltung einer erfindungsgemäßen Anschlussanordnung umfasst das Flachbandkabel im zweiten Anschlussbereich ein oder bevorzugt mehrere elektrische Verbindungsbereiche, in denen das Flachbandkabel mit einem Anschlusskabel lösbar oder fest verbunden ist.

Vorteilhafterweise sind im Verbindungsbereich die Leiterbahnen, d.h. die elektrische Leiterbahnen und/oder die Zusatzleiterbahnen, am zweiten Anschlussbereich mit elektrischen Adern eines oder mehrerer Anschlusskabel, insbesondere Rundkabel, elektrisch verbunden. Besonders bevorzugt sind die Leiterbahnen und die Adern durch Lötverbindungen, Quetschverbindungen, Klemmverbindungen oder Steckverbindungen elektrisch miteinander verbunden.

Die Anschlusskabel können wiederum an ihren, dem Verbindungsbereich abgewandten Ende, elektrisch Verbindungsmittel, wie Stecker oder Buchsen aufweisen, die die Anschlussanordnung mit einer erfindungsgemäßen elektrischen Steuereinheit, einer Boardelektronik oder anderen Steuer- und Auswerteeinheiten verbindbar macht.

In einer weiteren vorteilhaften Ausgestaltung kann der Verbindungsbereich oder die elektrischen Verbindungsmittel von einem oder mehreren Schutzgehäusen umgeben sein. Das oder die Schutzgehäuse erhöhen die mechanische Stabilität der Verbindungsbereiche bzw. der Verbindungsmittel, insbesondere bei der Fertigung der Anschlussanordnung und reduzieren so den Ausschuss an fehlerhaften Artikeln, was wiederum einer Kostenersparnis entspricht. Dabei wird das mindestens eine Schutzgehäuse derart angeordnet, dass es über dem einen oder den mehreren Verbindungsbereich oder Verbindungsmittel zu liegen kommt und vorzugsweise der äußeren Form der Verbindungsbereiche oder Verbindungsmittel nachgebildet ist. Somit ist es möglich, eine formschlüssige Umhausung des Verbindungsbereichs oder des Verbindungsmittels zu erreichen.

Das mindestens eine Schutzgehäuse dient zum mechanischen Schutz des Verbindungsbereichs oder Verbindungsmittels und ist vorteilhafterweise derart ausgebildet, dass es etwaigen Verformungen des Verbindungsbereichs bzw. Verbindungsmittels bei der Herstellung der Anschlussanordnung, insbesondere beim Laminieren der Verbundscheiben unter Vakuum und bei hohen Temperaturen, entgegenwirkt. Dabei kann das Schutzgehäuse aus einem entsprechend festen Kunststoff, beispielsweise Polyimid (PI) oder PA66 in Verbindung mit Glasfasern, bestehen. Besonders vorteilhaft besteht das mindestens eine Schutzgehäuse zu diesem Zweck aus einem Material, das härter ist, als das Material, aus dem die Verbindungsbereiche und -mittel bestehen.

Die Materialhärtebestimmung erfolgt dabei nach den bekannten gängigen Methoden, etwa gemäß ISO 14577, wie sie zum Zeitpunkt der Anmeldung, bzw. zum Prioritätszeitpunkt Anwendung fand.

Das Schutzgehäuse kann beispielsweise im Spritzguss- oder 3D-Druckverfahren hergestellt sein. Beispielsweise kann das Schutzgehäuse mit dem einen oder den mehreren Verbindungsbereich verklebt werden. Möglich ist aber auch eine gemeinsame Herstellung mit dem einen oder den mehreren Verbindungsbereichen, beispielsweise im Spritzgussverfahren.

Die Anschlussanordnung umfasst eine Verbundscheibe mit einem elektrischen Funktionselement, das im Innern der Verbundscheibe angeordnet ist. Bei dem elektrischen Funktionselement kann es um eine beliebige elektrische Struktur handeln, die eine elektrische Funktion erfüllt und einer Steuerung/Regelung durch eine externe Steuereinheit bedarf, so dass der Einsatz eines Flachbandkabels mit einer Mehrzahl von Leiterbahnen technisch sinnvoll ist.

Vorzugsweise handelt es sich bei dem elektrischen Funktionselement um eine vorteilhaft großflächige, elektrisch leitfähige und vorteilhaft für sichtbares Licht transparente Schicht (elektrische Funktionsschicht), so wie sie eingangs beschrieben wurde. Die elektrische Funktionsschicht oder eine Trägerfolie mit der elektrischen Funktionsschicht kann auf einer Oberfläche einer Einzelscheibe angeordnet sein. Beispielsweise befindet sich die elektrische Funktionsschicht auf einer innenliegenden Oberfläche der einen und/oder der anderen Scheibe. Alternativ kann die elektrische Funktionsschicht zwischen zwei thermoplastischen Folien der Zwischenschicht eingebettet sein. Die elektrische Funktionsschicht ist dann bevorzugt auf eine Trägerfolie oder Trägerscheibe aufgebracht. Die Trägerfolie oder Trägerscheibe enthält bevorzugt ein Polymer, insbesondere Polyvinylbutyral (PVB), Ethylenvinylacetat (EVA), Polyurethan (PU), Polyethylenterephthalat (PET) oder Kombinationen daraus.

Die elektrische Funktionsschicht ist vorzugsweise auf einer Oberfläche mindestens einer Scheibe angeordnet und bedeckt bzw. überdeckt die Oberfläche der Scheibe teilweise, jedoch vorzugsweise großflächig. Der Ausdruck "großflächig" bedeutet, dass mindestens 50%, mindestens 60%, mindestens 70%, mindestens 75% oder bevorzugt mindestens 90% der Oberfläche der Scheibe von der Funktionsschicht bedeckt ist. Die Funktionsschicht kann sich aber auch über kleinere Anteile der Oberfläche der Scheibe erstrecken. Die Funktionsschicht ist vorzugsweise transparent für sichtbares Licht. In einer vorteilhaften Ausgestaltung ist die Funktionsschicht eine Einzelschicht oder ein Schichtaufbau aus mehreren Einzelschichten mit einer Gesamtdicke von kleiner oder gleich 2 µm, besonders bevorzugt kleiner oder gleich 1 µm.

Im Sinne vorliegender Erfindung bedeutet "transparent", dass die Gesamttransmission der Verglasung den gesetzlichen Bestimmungen für Windschutzscheiben und vordere Seitenscheiben entspricht und für sichtbares Licht bevorzugt eine Durchlässigkeit von mehr als 70% und insbesondere von mehr als 75% aufweist. Für hintere Seitenscheiben und Heckscheiben kann "transparent" auch 10% bis 70% Lichttransmission bedeuten. Entsprechend bedeutet "opak" eine Lichttransmission von weniger als 15%, vorzugsweise weniger als 5%, insbesondere 0%.

Beispielsweise enthält die elektrische Funktionsschicht mindestens ein Metall, bevorzugt Silber, Nickel, Chrom, Niob, Zinn, Titan, Kupfer, Palladium, Zink, Gold, Cadmium, Aluminium, Silizium, Wolfram oder Legierungen daraus, und/oder mindestens eine Metalloxidschicht, bevorzugt Zinndotiertes Indiumoxid (ITO), Aluminium-dotiertes Zinkoxid (AZO), Fluor-dotiertes Zinnoxid (FTO, SnO2:F) oder Antimon-dotiertes Zinnoxid (ATO, SnO2:Sb). Transparente, elektrisch leitfähige Schichten sind beispielsweise aus DE 20 2008 017 611 U1 und EP 0 847 965 B1 bekannt. Sie bestehen beispielsweise aus einer Metallschicht wie einer Silberschicht oder einer Schicht aus einer silberhaltigen Metalllegierung. Typische Silberschichten weisen bevorzugt Dicken von 5 nm bis 15 nm auf, besonders bevorzugt von 8 nm bis 12 nm. Die Metallschicht kann zwischen mindestens zwei Schichten aus dielektrischem Material vom Typ Metalloxid eingebettet sein. Das Metalloxid enthält bevorzugt Zinkoxid, Zinnoxid, Indiumoxid, Titanoxid, Siliziumoxid, Aluminiumoxid oder dergleichen sowie Kombinationen von einem oder mehreren daraus. Das dielektrische Material kann auch Siliziumnitrid, Siliziumcarbid, Aluminiumnitrid sowie Kombinationen von einem oder mehreren davon enthalten. Der Schichtaufbau wird im Allgemeinen durch eine Folge von Abscheidevorgängen erhalten, die durch ein Vakuumverfahren wie die magnetfeldgestützte Kathodenzerstäubung oder durch chemische Gasphasenabscheidung (CVD) durchgeführt werden. Auf beiden Seiten der Silberschicht können auch sehr feine Metallschichten vorgesehen sein, die insbesondere Titan oder Niob enthalten. Die untere Metallschicht dient als Haft- und Kristallisationsschicht. Die obere Metallschicht dient als Schutz- und Getterschicht, um eine Veränderung des Silbers während der weiteren Prozessschritte zu verhindern.

Transparente, elektrische Funktionsschichten haben bevorzugt einen Flächenwiderstand von 0,1 Ohm/Quadrat bis 200 Ohm/Quadrat, besonders bevorzugt von 1 Ohm/Quadrat bis 50 Ohm/Quadrat und ganz besonders bevorzugt von 1 Ohm/Quadrat bis 10 Ohm/Quadrat.

Vorzugsweise ist die elektrische Funktionsschicht eine elektrisch beheizbare Schicht, durch welche die Verbundscheibe mit einer Heizfunktion versehen wird. Solche beheizbaren Schichten sind dem Fachmann an sich bekannt. Sie enthalten typischerweise eine oder mehrere, beispielsweise zwei, drei oder vier elektrisch leitfähige Schichten. Diese Schichten enthalten oder bestehen bevorzugt aus zumindest einem Metall, beispielsweise Silber, Gold, Kupfer, Nickel und/oder Chrom, oder einer Metalllegierung und enthalten bevorzugt mindestens 90 Gew. % des Metalls, insbesondere mindestens 99,9 Gew. % des Metalls. Solche Schichten weisen eine besonders vorteilhafte elektrische Leitfähigkeit bei gleichzeitiger hoher Transmission im sichtbaren Spektralbereich auf. Die Dicke einer Einzelschicht beträgt bevorzugt von 5 nm bis 50 nm, besonders bevorzugt von 8 nm bis 25 nm. Bei einer solchen Dicke wird eine vorteilhaft hohe Transmission im sichtbaren Spektralbereich und eine besonders vorteilhafte elektrische Leitfähigkeit erreicht.

Bei dem elektrischen Funktionselement kann es sich gleichermaßen bevorzugt um eine elektrooptische Komponente handeln, wie beispielsweise ein elektrochromes (EC-) Element, ein SPD-Element, ein PDLC-Element oder ein Guest-Host-Element, wie sie eingangs beschrieben wurden. Diese sind dem Fachmann an sich bekannt, so dass sie nicht näher erläutert werden müssen. Die elektrische Funktionsschicht kann auch eine polymere elektrisch leitfähige Schicht sein, beispielsweise enthaltend zumindest ein konjugiertes Polymer oder ein mit leitfähigen Partikeln versehenes Polymer.

Elektrooptische Komponenten, wie elektrochrome Elemente, SPD-, PDLC- oder sogenannte Guest-Host-Elemente, sind als Mehrschichtfolien kommerziell erhältlich, wobei die aktive Schicht zwischen zwei Flächenelektroden angeordnet ist, die zum Anlegen einer Spannung zur Steuerung der aktiven Schicht dienen. In aller Regel sind die beiden Flächenelektroden zwischen zwei Trägerfolien, typischerweise aus PET, angeordnet. Kommerziell erhältliche Mehrschichtfolien werden zudem beidseitig mit einer Schutzfolie aus Polypropylen oder Polyethylen abgedeckt, welche dazu dienen, die Trägerfolien vor Verschmutzungen oder Verkratzungen zu schützen. Bei der Herstellung der Verbundscheibe wird das elektrooptische Bauteil in der gewünschten Größe und Form aus der Mehrschichtfolie ausgeschnitten und zwischen die Folien einer Zwischenschicht eingelegt, mittels derer zwei Glasscheiben miteinander zur Verbundscheibe laminiert werden. Eine typische Anwendung sind Windschutzscheiben mit elektrisch regelbaren Sonnenblenden, welche beispielsweise aus DE 102013001334 A1, DE 102005049081 B3, DE 102005007427 A1 und DE 102007027296 A1 bekannt sind.

Alternative elektrische Funktionselemente umfassen LED- oder OLED-Leuchtelement oder photovoltaische Bauelemente wie (Dünnschicht-)Solarzellen oder Antennensysteme.

In der erfindungsgemäßen Anschlussanordnung ist das elektrische Funktionselement vorteilhaft mit mindestens zwei Sammelleitern elektrisch verbunden, durch die ein Strom eingespeist werden kann. Die Sammelleiter sind bevorzugt im Randbereich des elektrischen Funktionselements angeordnet. Die Länge des Sammelleiters ist typischerweise im Wesentlichen gleich der Länge der jeweiligen Seitenkante des elektrischen Funktionselements, kann aber auch etwas größer oder kleiner sein. Vorzugsweise sind zwei Sammelleiter angeordnet, im Randbereich entlang zweier gegenüberliegenden Seitenkanten des Funktionselements. Die Breite des Sammelleiters beträgt bevorzugt von 2 mm bis 30 mm, besonders bevorzugt von 4 mm bis 20 mm. Die Sammelleiter sind typischer Weise jeweils in Form eines Streifens ausgebildet, wobei die längere seiner Dimensionen als Länge und die weniger lange seiner Dimensionen als Breite bezeichnet wird. Solche Sammelleiter sind beispielsweise als aufgedruckte und eingebrannte leitfähige Struktur ausgebildet. Der aufgedruckte Sammelleiter enthält zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und/oder anorganischen Matrix wie Pasten oder Tinten befinden, bevorzugt als gebrannte Siebdruckpaste mit Glasfritten. Die Schichtdicke des aufgedruckten Sammelleiters beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf. Alternativ kann der Sammelleiter aber auch als Streifen einer elektrisch leitfähigen Folie ausgebildet sein. Der Sammelleiter enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die Verbundscheibe der Anschlussanordnung umfasst eine erste Scheibe und eine zweite Scheibe, die bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43. Die erste Scheibe und die zweite Scheibe können auch als Außen- und Innenscheibe bezeichnet werden.

Die erste Scheibe, die zweite Scheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen vorteilhaft Standardstärken von 0,7 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, auf. Die Größe der Scheiben kann breit variieren und richtet sich nach der Größe der erfindungsgemäßen Verwendung. Die erste und die zweite Scheibe weisen beispielsweise im Fahrzeugbau und Architekturbereich übliche Flächen von 200 cm² bis zu 20 m² auf.

In einer weiteren vorteilhaften Ausgestaltung eines erfindungsgemäßen Flachbandkabels oder einer Anschlussanordnung ist eine Schutzfolie, Schutzkörper oder eine Schutzmasse, bevorzugt aus einem Epoxid-Harz oder einem Buthyl-Material, auf und/oder um den Temperatursensor oder auf der dem Temperatursensor abgewandten Oberfläche des Flachbandkabels und insbesondere der Trägerfolie angeordnet. Dies hat den besonderen Vorteil, den Temperatursensor, die elektrische Leitungsverbindungen zwischen Temperatursensor und Zusatzleiterbahnen sowie die Zusatzleiterbahnen in der Umgebung des Temperatursensors bei der Lamination vor Beschädigung zu schützen.

Ein weiteres Ausführungsbeispiel der Erfindung betrifft ein Steuerungssystem, welches zumindest:
- eine erfindungsgemäße Anschlussanordnung und
- eine elektrische Steuereinheit, die mit den Zusatzleiterbahnen und der mindestens einen elektrischen Leiterbahn elektrisch verbunden ist,

aufweist, wobei
die elektrische Steuereinheit dazu ausgebildet ist,
   - einen ohmschen Widerstandswert R_{Mess} zwischen den Enden der Zusatzleiterbahnen zu messen und
   - in Abhängigkeit des gemessenen Widerstandswerts R_{Mess}
      o das elektrische Funktionselement zu steuern und/oder
      o einen Defekt, bevorzugt einen Bruch und/oder einen Kurzschluss, der Zusatzleiterbahnen mit dazwischen angeordnetem Temperatursensor zu detektieren.

Die Steuereinheit ist dazu ausgebildet den ohmschen Widerstand R_{Mess} zwischen den Zusatzleiterbahnen mit dazwischen angeordnetem Temperatursensor zu messen, insbesondere über die Anschlüsse im zweiten Anschlussbereich des Flachbandkabels. Die Steuereinheit kann dann - unter Berücksichtigung des Eigenwiderstands der Zusatzleiterbahnen und weiterer Widerstände der Zuleitungen, Stecker, etc. - auf den Widerstandswert des Temperatursensors und daraus resultierend auf die Temperatur T am Temperatursensor schließen. Dazu ist die Widerstands-Temperatur-Kennlinie oder eine Tabelle in der elektrischen Steuereinheit hinterlegt. Die Temperaturmessung kann dabei punktuell oder kontinuierlich erfolgen.

Die Steuereinheit ist vorteilhafterweise auch mit den elektrischen Leiterbahnen verbunden, mit denen ein über die Anschlussbereiche verbundenes elektrisches Funktionselement elektrisch betrieben und gesteuert werden kann.

Die Steuereinheit ist vorteilhafterweise derart ausgebildet, dass sie die Steuerspannungen S für das elektrische Funktionselement an die gemessene Temperatur T am Temperatursensor anpasst. Die geeignete Steuerspannung S kann beispielsweise durch die elektrische Steuereinheit berechnet werden oder durch Tabellen in der elektrischen Steuereinheit hinterlegt oder einprogrammiert sein. So kann beispielsweise bei Überschreiten einer gewissen Temperatur T die Steuerspannung S reduziert oder vollständig abgeschaltet werden, um das elektrische Funktionselement zu schützen. Dies ist insbesondere bei einem PDLC-Element als elektrisches Funktionselement vorteilhaft. Alternativ kann die Steuerspannung S erhöht werden, beispielsweise um eine mit steigender Temperatur nachlassende optische Färbung oder Transparenzänderung aufrecht zu erhalten oder eine Änderungsgeschwindigkeit zu erhöhen.

Des Weiteren kann durch Messen des ohmschen Widerstands R_{Mess} der Zusatzleitung mit dazwischen angeordneten Temperatursensor (beispielsweise über Anschlüsse im zweiten Anschlussbereich) auf eine Beschädigung des Flachbandkabels und der darin enthaltenen elektrischen Leiterbahnen geschlossen werden. Die Messung kann dabei punktuell oder kontinuierlich erfolgen. Wir ein ohmscher Widerstand R_{Mess} oberhalb eines oberen Referenz-Widerstandswert R_{Ref_o} gemessen, deutet dies auf einen Bruch oder Defekt im Messkreis aus Zusatzleiterbahnen und Temperatursensor hin.

Beispiel: Bei Messung des ohmschen Widerstands R_{Mess} an unbeschädigten Zusatzleitungen mit einem Temperatursensor in Form eines NTC-Thermistors mit einem R₂₅ von beispielsweise 10 kOhm bei 25°C, ergibt sich bei einer Temperatur T am unteren Betriebsbereich von beispielsweise -40°C ein oberer Widerstand R_{Ref_o} von ca. 200 kOhm. Wird dieser Referenz-Widerstandswert R_{Ref_o} überschritten, beispielsweise um 10%, deutet dies auf einen Bruch oder Defekt im Messkreis aus Zusatzleiterbahnen und Temperatursensor hin, woraus auf einen Defekt des Flachbandkabels geschlossen werden kann.

Wird ein ohmscher Widerstand R_{Mess} unterhalb eines unteren Referenz-Widerstandswert R_{Ref_u} gemessen, deutet dies auf einen Kurzschluss im Messkreis aus Zusatzleiterbahnen und Temperatursensor hin.

Beispiel: Bei Messung des ohmschen Widerstands R_{Mess} von unbeschädigte Zusatzleitungen mit einem Temperatursensor in Form eines NTC-Thermistors mit einem R₂₅ von beispielsweise 10 kOhm bei 25°C, ergibt sich bei einer Temperatur T am oberen Betriebsbereich von beispielsweise 150°C ein unterer Widerstand R_{Ref_u} von ca. 300 Ohm. Wird dieser untere Referenz-Widerstandswert R_{Ref_u} unterschritten, deutet dies auf einen Kurzschluss im Messkreis aus Zusatzleiterbahnen und Temperatursensor hin, woraus ebenfalls auf einen Defekt des Flachbandkabels geschlossen werden kann.

Nicht beansprucht ist ein Verfahren zur Herstellung einer erfindungsgemäßen Anschlussanordnung und umfasst die folgenden Schritte:
a) Bereitstellen eines erfindungsgemäßen Flachbandkabels mit elektrischen Leiterbahnen sowie zwei Zusatzleiterbahnen mit dazwischen angeordnetem Temperatursensor, wobei das Flachbandkabel an einem ersten Ende einen ersten Anschlussbereich und an einem zweiten Ende einen zweiten Anschlussbereich aufweist,
b) Elektrisch leitendes Verbinden der Leiterbahnen des Flachbandkabels im ersten Anschlussbereich mit einem elektrischen Funktionselement,
c) Anordnen des Flachbandkabels zwischen zwei Scheiben derart, dass sich der erste Anschlussbereich zwischen den beiden Scheiben befindet und der zweite Anschlussbereich zwischen den beiden Scheiben herausgeführt ist,
d) Laminieren der beiden Scheiben über eine thermoplastische Zwischenschicht nach den Schritten a), b) und c).

Die Schritte a), b) und c) können in einer beliebigen Reihenfolge durchgeführt werden.

Gemäß einer Ausgestaltung des nicht beanspruchten Verfahrens wird vor oder nach dem Laminieren der beiden Scheiben, ein elektrischer Verbindungsbereich, bevorzugt durch Lötverbindungen, Quetschverbindungen, Klemmverbindungen oder Steckverbindungen zwischen dem zweiten Anschlussbereich des Flachbandkabels und einem Anschlusskabel, insbesondere einem Rundkabel ausgebildet.

Das Verbinden der beiden Einzelscheiben beim Laminieren erfolgt bevorzugt unter Einwirkung von Hitze, Vakuum und/oder Druck. Es können an sich bekannte Verfahren zur Herstellung einer Verbundscheibe verwendet werden. Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die Erfindung betrifft weiterhin ein Verfahren zur Temperaturmessung eines erfindungsgemäßen Flachbandkabels, wobei
a) ein erfindungsgemäßes Flachbankkabel, eine erfindungsgemäße Anschlussanordnung oder ein erfindungsgemäßes Steuerungssystem bereitgestellt wird,
b) der ohmsche Widerstand zwischen den Enden der Zusatzleiterbahnen mit dazwischen angeordnetem Temperatursensor gemessen wird, wobei der gemessene Widerstandwert R_{Mess} einer Temperatur T am Temperatursensor entspricht.

In einer vorteilhaften Ausführungsform des erfindungsgemäßen Verfahrens wird die Steuerspannung S des mit dem erfindungsgemäßen Flachbandkabels elektrisch verbundenen erfindungsgemäßen elektrischen Funktionselements von der Temperaturmessung abhängig gewählt.

In einer weiteren vorteilhaften Ausführungsform des erfindungsgemäßen Verfahrens wird der Schritt b) wiederholt durchgeführt, bevorzugt kontinuierlich, und die Steuerspannung S entsprechen angepasst.

In einer weiteren vorteilhaften Ausführungsform des erfindungsgemäßen Verfahrens wird in einem Schritt c) vor oder nach dem Schritt b), der gemessene Widerstandwert R_{Mess} mit einem Referenz-Widerstandswert R_{Ref_u/o} verglichen, wobei ein Überschreiten oder Unterschreiten des Referenz-Widerstandswerts R_{Ref_u/o} einem Defekt, bevorzugt einem Bruch oder einem Kurzschluss, im Flachbandkabel entspricht

Besonders bevorzugt wird der Schritt c) durchgeführt, bevor und/oder nachdem das erfindungsgemäße Flachbandkabel in einer Anschlussanordnung angeordnet wird.

Nicht beansprucht ist ein Verfahren zur Brucherkennung eines erfindungsgemäßen Flachbandkabels oder einer erfindungsgemäßen Anschlussanordnung, wobei
a) ein erfindungsgemäßes Flachbankkabel oder eine erfindungsgemäße Anschlussanordnung bereitgestellt wird,
b) ein ohmscher Referenz-Widerstandswert R_{Ref_u/o} zwischen den Enden der, bevorzugt unbeschädigten, Zusatzleiterbahn gemessen oder berechnet wird,
c) der ohmsche Widerstand R_{Mess} zwischen den Enden der Zusatzleiterbahn gemessen wird und der Widerstand R_{Mess} mit dem Referenz-Widerstandswert R_{Ref_u/o} verglichen wird.

In einer vorteilhaften Ausführungsform des nicht beanspruchten Verfahrens gilt das Flachbandkabel als defekt, wenn der gemessene ohmsche Widerstand R_{Mess} um mehr als 5%, bevorzugt mehr als 10% und besonders bevorzugt um mehr als 50%, von dem ohmscher Referenz-Widerstandswert R_{Ref_u/o} abweicht. Insbesondere gilt das Flachbandkabel als defekt, wenn der gemessene ohmsche Widerstand R_{Mess} um mehr als 5%, bevorzugt mehr als 10% und besonders bevorzugt um mehr als 50%, höher als oberer ohmscher Referenz-Widerstandswert R_{Ref_o} ist und/oder um mehr als 5%, bevorzugt mehr als 10% und besonders bevorzugt um mehr als 50%, niedriger als ein unterer ohmscher Referenz-Widerstandswert R_{Ref_u} ist. Die ohmschen Referenz-Widerstandswerte sind dabei abhängig von Widerstandsbereich des Temperatursensors im jeweiligen Betriebsbereich und von der Charakteristik des Temperatursensors, insbesondere ob es sich einen Temperatursensor mit negativen Temperaturkoeffizienten (NTC) oder mit positiven Temperaturkoeffizienten (PTC) handelt.

Der ohmsche Referenz-Widerstandswert R_{Ref_u/o} kann für den Fachmann einfach berechnet oder gemessen werden. Ist die Zusatzleiterbahn beschädigt ergeben sich typischerweise höherohmige gemessene Widerstandswerte R_{Mess} als der Referenz-Widerstandswert R_{Ref_o}. Dadurch kann auf einen Defekt des Flachbandkabels und insbesondere auf eine Unterbrechung der Leiterbahnen geschlossenen werden Niederohmigere gemessene ohmsche Widerstandswerte R_{Mess} als der Referenz-Widerstandswert R_{Ref_u} können auf einen Kurzschluss innerhalb des Flachbandkabels hindeuten.

In einer vorteilhaften Ausführungsform des Verfahrens wird der Schritt c) durchgeführt, bevor und/oder nachdem das Flachbandkabel in einer Anschlussanordnung angeordnet wird.

In einer weiteren vorteilhaften Ausführungsform des Verfahrens wird der Schritt c) wiederholt durchgeführt.

Die Erfindung betrifft weiterhin die Verwendung eines erfindungsgemäßen Flachbandkabels, einer Anschlussanordnung oder eines Steuerungssystems als Gebäudeverglasung oder Fahrzeugverglasung, bevorzugt als Fahrzeugverglasung, insbesondere als Windschutzscheibe oder Dachscheibe eines Kraftfahrzeugs.

Die Erfindung betrifft weiterhin die Verwendung eines erfindungsgemäßen Flachbandkabels, einer Anschlussanordnung oder eines Steuerungssystems zur Temperaturmessung oder zur kombinierten Temperaturmessung und Defekterkennung, insbesondere zur Bruch- und/oder Kurzschlusserkennung.

Die Erfindung wird nachfolgend anhand von Ausführungsbeispielen näher erläutert, wobei Bezug auf die beigefügten Figuren genommen wird. Gleiche bzw. gleichwirkende Elemente sind mit dem gleichen Bezugszeichen versehen. Es zeigen in vereinfachter, nicht maßstabsgetreuer Darstellung:
- Figur 1A: eine schematische Darstellung des ersten Anschlussbereichs eines erfindungsgemäßen Flachbandkabels,
- Figur 1B: eine schematische Querschnittsdarstellung entlang der Schnittlinie A-A' des erfindungsgemäßen Flachbandkabels nach Figur 1A,
- Figur 2: eine schematische Darstellung des Flachbandkabels nach Figur 1A mit Defekt,
- Figur 3A: eine schematische Draufsicht auf ein Verbundscheibe einer erfindungsgemäßen Anschlussanordnung,
- Figur 3B: einen Ausschnitt der Anschlussanordnung von Figur 3A in Detailansicht, und
- Figur 3C: einen Ausschnitt der Anschlussanordnung von Figur 3A in Detailansicht auf eine Seitenfläche der Verbundscheibe, und
- Figur 4: eine schematische Darstellung des ersten Anschlussbereichs eines alternativen erfindungsgemäßen Flachbandkabels.

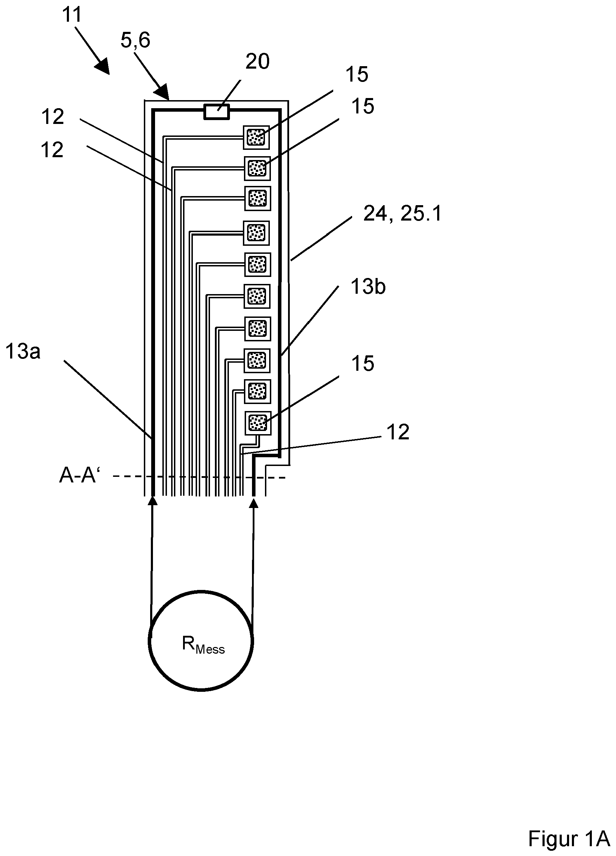

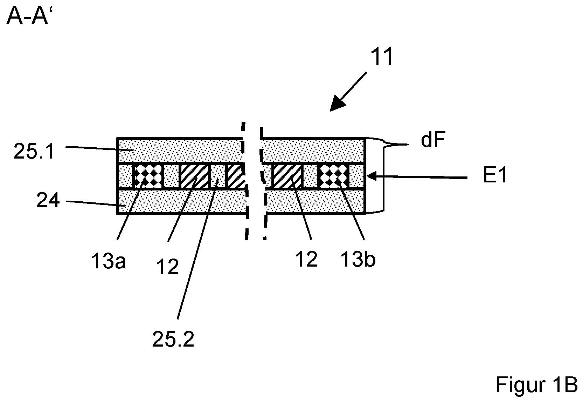

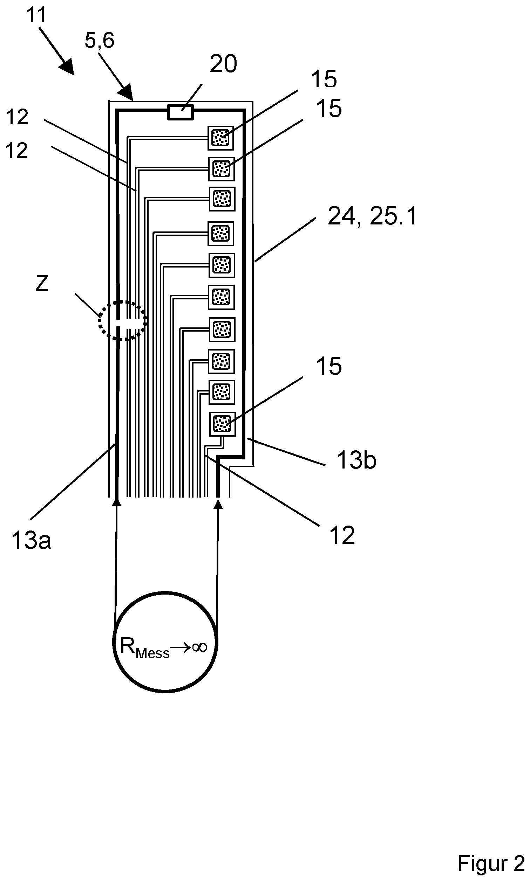

Es wird zunächst Bezug auf die Figuren 1A, 1B und 2 genommen, worin ein insgesamt mit der Bezugszahl 11 bezeichnetes Flachbandkabel in schematischer Weise veranschaulicht ist.

Figur 1A zeigt eine schematische Darstellung des ersten Anschlussbereichs 6 eines erfindungsgemäßen Flachbandkabels 11. Der erste Anschlussbereich 6 befindet sich an einem ersten Ende 5 des Flachbandkabels 11.

Figur 1B zeigt eine schematische Querschnittsdarstellung entlang der Schnittlinie A-A' des erfindungsgemäßen Flachbandkabels 11 nach Figur 1A.

Auf einer polymeren Trägerfolie 24 sind beispielsweise zehn elektrische Leiterbahnen 12 angeordnet und beispielsweise mit der Trägerfolie 24 verklebt. Die elektrischen Leiterbahnen 12 münden jeweils in eine Anschlusselektrode 15. Des Weiteren sind auf der Trägerfolie 24 zwei Zusatzleiterbahnen 13a, 13b im Wesentlichen U-förmig um den ersten Anschlussbereich 6 im Randbereich der Trägerfolie 24 geführt. Die Zusatzleiterbahnen 13a, 13b kontaktieren jeweils einen der zwei Anschlüsse eines Temperatursensors 20, der hier beispielsweise in der Mitte des ersten Endes 3 des Flachbandkabels 11 angeordnet ist.

Der Temperatursensor 20 ist beispielsweise ein Thermistor, also ein elektrischer Widerstand, dessen Wert sich mit der Temperatur reproduzierbar ändert. Der Thermistor ist beispielsweise ein NTC-Thermistor, also ein sogenannter Heißleiter, der über einem negativen Temperaturkoeffizienten (NTC) verfügt und im heißen Zustand besser als im kalten Zustand elektrisch leitet. Der Thermistor hat bevorzugt einen Widerstandswert R₂₅ von 1 kOhm bis 100 kOhm und beispielsweise 10 kOhm. Damit lassen sich typischerweise Temperaturen T von -40°C bis +150°C reproduzierbar messen. Der Temperatursensor 20 ist bevorzugt in SMD-Technik ausgeführt und weist nur eine geringe Dicke auf.

Die Zusatzleiterbahnen 13a, 13b und der Temperatursensor 20 sind beispielsweise mit der Trägerfolie 24 verklebt. Der Abstand der Zusatzleiterbahnen 13a, 13b zum Rand der Trägerfolie 24 beträgt beispielsweise 3 mm.

Die elektrischen Leiterbahnen 12 und die Zusatzleiterbahnen 13a, 13b bestehen beispielsweise aus einer dünnen Kupfer-, Silber-, Zinn- oder Goldfolie. Die Folien können zusätzlich beschichtet sein, beispielsweise versilbert, vergoldet oder verzinnt. Die Dicke der Folien beträgt beispielsweise 35 µm, 50 µm, 75 µm oder 100 µm.

Die Trägerfolie 24, die elektrischen Leiterbahnen 12, die Zusatzleiterbahnen 13a, 13b und bevorzugt auch der Temperatursensor 20 sind mit einer Deckfolie 25.1 bedeckt und bevorzugt mit dieser verklebt. So entsteht ein Flachbandkabel 11 mit eingebetteten Leiterbahnen 12,13a, 13b, die nach außen elektrisch isoliert sind. Die Deckfolie 25.1 oder die Trägerfolie 24 sind typischerweise in den Bereichen der Anschlusselektroden 15 ausgenommen, so dass das Flachbandkabel 11 dort elektrisch kontaktierbar ist. Zwischen den einzelnen Leiterbahnen 12, 13a, 13b und zwischen den Zusatzleiterbahnen 13a, 13b und dem Rand der Trägerfolie 24 können weitere Abschnitte einer Isolationsfolie 25.2 angeordnet sein.

Für das Material der Trägerfolie 24 sind Folien aus Polyimid, bevorzugt schwarze oder gelbe Polyimidfolien (z.B. PI-MTB/MBC), beispielsweise mit einer Dicke von 25 µm oder von 50 µm, besonders geeignet. Alternativ können Polymerfolien aus PEN, bevorzugt aus weißem, schwarzem oder transparenten PEN, beispielsweise mit einer Dicke von 25 µm verwendet werden.

Für das Material der Deckfolie 25.1 und ggf. als Isolationsfolie 25.2 sind Folien aus Polyimid, bevorzugt schwarze oder gelbe Polyimidfolien (z.B. PI-MTB/MBC), beispielsweise mit einer Dicke von 25 µm, besonders geeignet. Alternativ können Polymerfolien aus PEN, bevorzugt aus weißem PEN, beispielsweise mit einer Dicke von 25 µm verwendet werden.

Klebeschichten zwischen Trägerfolie 24, Deckfolie 25.1, Isolationsfolie 25.2, elektrischer Leiterbahn 12 und/oder Zusatzleiterbahnen 13a, 13b können beispielsweise Epoxy-Klebstoffe oder thermoplastische Klebstoffe enthalten oder daraus bestehen. Typische Dicken der Klebstofffilme sind von 25 µm bis 35 µm. Die Klebstoffe können transparent oder gefärbt sein, beispielsweise schwarz.

Durch eine Messung des elektrischen Widerstandswerts und insbesondere des ohmschen Widerstandswerts R_{Mess} zwischen den Zusatzleiterbahnen 13a, 13b mit dazwischen angeordnetem Temperatursensor 20 (beispielsweise über Anschlüsse im zweiten Anschlussbereich 8) kann, unter Berücksichtigung des Eigenwiderstands der Zusatzleiterbahnen 13a, 13b und weiterer Widerstände der Zuleitungen, Stecker, etc., auf den Widerstandswert des Temperatursensors 20 und daraus resultierend auf die Temperatur T am Temperatursensor 20 geschlossen werden.

Dazu kann die Widerstands-Temperatur-Kennlinie oder eine Tabelle in einer elektrischen Steuereinheit (hier nicht dargestellt) hinterlegt sein, die mit den Anschlüssen der Zusatzleiterbahnen 13a, 13b elektrisch verbunden ist und mit der die Widerstandsmessung durchgeführt wird.

Die Steuereinheit kann auch mit den elektrischen Leiterbahnen 12 verbunden sein, mit denen eine über die Anschlussbereiche 15 verbundenes elektrisches Funktionselement 10 elektrisch betrieben und gesteuert werden kann.

Die Steuereinheit kann beispielsweise derart ausgebildet sein, die Steuerspannungen S für das elektrische Funktionselement 10 an die gemessene Temperatur T am Temperatursensor 20 anzupassen. So kann beispielsweise bei Überschreiten einer gewissen Temperatur T die Steuerspannung reduziert oder vollständig abgeschaltet werden, um das elektrische Funktionselement 10 zu schützen. Dies ist besonders bei einem PDLC-Element als elektrisches Funktionselement 10 vorteilhaft. Alternativ kann die Steuerspannung S erhöht werden, beispielsweise um eine mit steigender Temperatur nachlassende optische Färbung oder Transparenzänderung aufrecht zu erhalten.

Des Weiteren kann durch Messen des ohmschen Widerstands R_{Mess} der Zusatzleitung 13a, 13b, beispielsweise über Anschlüsse im zweiten Anschlussbereich 8, auf eine Beschädigung des Flachbandkabels 11 und der darin enthaltenen elektrischen Leiterbahnen 12 geschlossen werden. Die Messung kann dabei punktuell oder kontinuierlich erfolgen. Bei Messung des ohmschen Widerstands R_{Mess} unbeschädigter Zusatzleitungen 13a, 13b mit einem Temperatursensor 20 in Form eines NTC-Thermistors mit einem R₂₅ von beispielsweise 10 kOhm, ergibt sich bei einer Temperatur T am unteren Betriebsbereich von beispielsweise -40°C ein oberer Widerstand R_{Ref_o} von ca. 200 kOhm. Wird dieser Referenz-Widerstandswert R_{Ref_o} deutlich überschritten, deutet dies auf einen Bruch oder Defekt im Messkreis aus Zusatzleiterbahnen 13a, 13b und Temperatursensor 20 hin, woraus auf einen Defekt des Flachbandkabels 11 geschlossen werden kann. Bei Messung des ohmschen Widerstands R_{Mess} unbeschädigter Zusatzleitungen 13a, 13b mit einem Temperatursensor 20 in Form eines NTC-Thermistors mit einem R₂₅ von beispielsweise 10 kOhm, ergibt sich bei einer Temperatur T am oberen Betriebsbereich von beispielsweise 150°C ein unterer Widerstand R_{Ref_u} von ca. 300 Ohm. Wird dieser untere Referenz-Widerstandswert R_{Ref_u} deutlich unterschritten, deutet dies auf einen Kurzschluss im Messkreis aus Zusatzleiterbahnen 13a, 13b und Temperatursensor 20 hin, woraus ebenfalls auf einen Defekt, beispielsweise einen Kurzschluss, im Flachbandkabel 11 geschlossen werden kann.

Figur 2 zeigt eine schematische Darstellung des Flachbandkabels 11 nach Figur 1A mit Defekt in einem Bruchbereich Z. Im Bruchbereich Z sind die zwei in der Figur links angeordneten elektrischen Leiterbahnen 12 und die Zusatzleiterbahnen 13a, 13b beschädigt und unterbrochen. Der gemessene ohmsche Widerstandswert R_{Mess} der Zusatzleiterbahnen 13a, 13b mit dem Temperatursensor 20 ist dann sehr hoch, typischerweise im höheren Kiloohm (kOhm) oder Megaohm (MOhm)-Bereich.

Derartige Beschädigungen ergeben sich oftmals durch übermäßige Belastung des Flachbandkabels 11, beispielsweise nach Einlaminieren in eine Verbundscheibe und biegen des Flachbandkabels 11 um eine Scheibenkante.

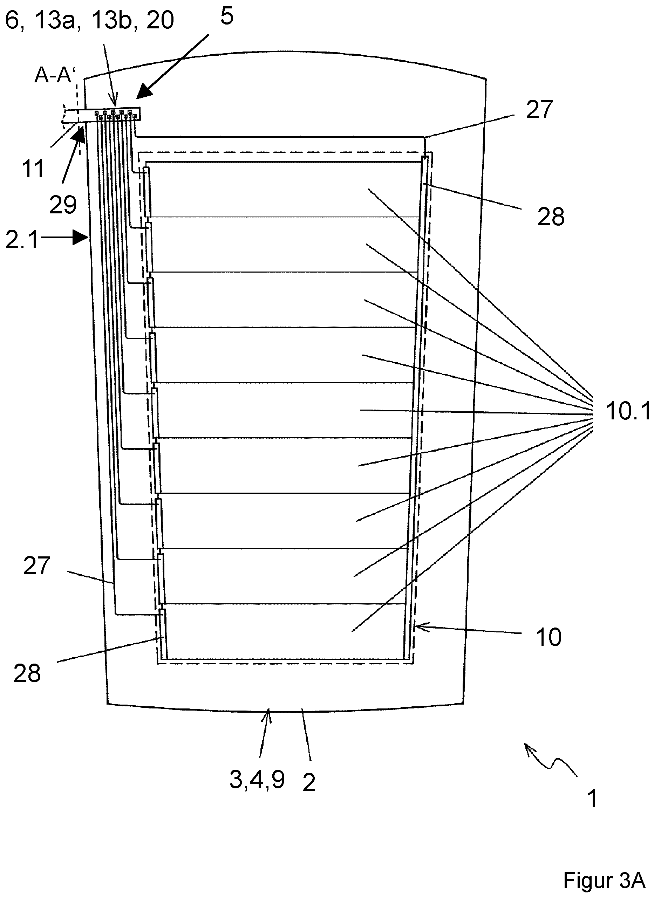

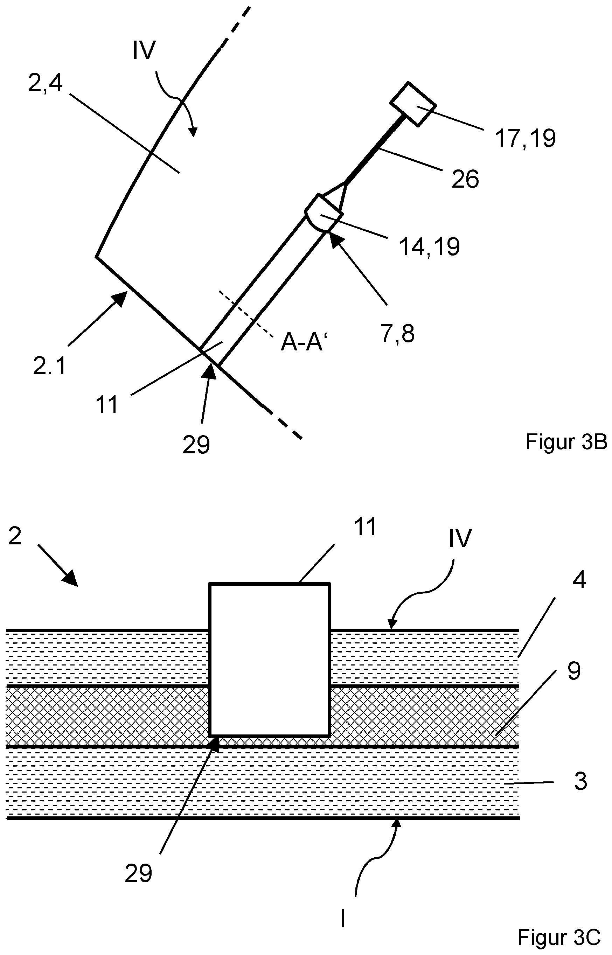

Weiterhin wird Bezug auf die Figuren 3A, 3B und 3C genommen, worin eine insgesamt mit der Bezugszahl 1 bezeichnete Anschlussanordnung in schematischer Weise veranschaulicht ist.

Figur 3A zeigt dabei eine Durchsicht durch eine insgesamt mit der Bezugszahl 2 bezeichneten Verbundscheibe.

Figur 3B zeigt einen Ausschnitt der Verbundscheibe 2 in einer Draufsicht in dem Bereich, in dem ein erfindungsgemäßes Flachbandkabel 11 aus der Seitenfläche 2.1 der Verbundscheibe 2 herausgeführt ist.

Figur 3C zeigt einen Ausschnitt der Anschlussanordnung 1 von Figur 3A in Detailansicht auf eine Seitenfläche 2.1 der Verbundscheibe 2.

Die Anschlussanordnung 1 umfasst eine Verbundscheibe 2, die hier beispielsweise als Dachscheibe eines Kraftfahrzeugs ausgebildet ist. Wie in Figur 3C schematisch dargestellt, umfasst die Verbundscheibe 2 eine erste Scheibe 3, die als Außenscheibe dient, und eine zweite Scheibe 4 als Innenscheibe. Die Innenscheibe ist dabei die zum Fahrzeuginnenraum gerichtete Scheibe, während die Außenscheibe zur Fahrzeugumgebung weist. Die der Fahrzeugumgebung zugewandte Oberfläche der Außenscheibe (erste Scheibe 3) wird, wie in der Fahrzeugverglasungstechnik üblich, als Oberfläche I bezeichnet und die dem Fahrzeuginnenraum zugewandte Oberfläche der Innenscheibe (zweite Scheibe 4) wird als Oberfläche IV bezeichnet. Die beiden Scheiben 3, 4 bestehen beispielsweise aus Kalk-Natron-Glas. Die beiden Scheiben 3, 4 sind durch zwei thermoplastische Zwischenschichten 9 beispielsweise aus Polyvinylbutyral (PVB), Ethylen-Vinyl-Acetat (EVA) oder Polyurethan (PU) fest miteinander verbunden.

Die Verbundscheibe 2 ist mit einem gleichermaßen lediglich schematisch dargestellten elektrischen Funktionselement 10 versehen, das sich zwischen den beiden Scheiben 3, 4 befindet. Das elektrische Funktionselement 10 ist hier beispielsweise ein PDLC-Element, das beispielsweise als elektrisch regelbarer Sonnen- oder Sichtschutz dient. Das PDLC-Element ist durch eine kommerziell erhältliche PDLC-Mehrschichtfolie gebildet, die in die Zwischenschicht 9 eingelagert ist. Die Zwischenschicht 9 umfasst zu diesem Zweck beispielsweise insgesamt drei thermoplastische Folien (nicht gezeigt) mit einer Dicke von beispielsweise 0,38 mm aus PVB, wobei eine erste thermoplastische Folie mit der ersten Scheibe 3 verbunden ist, und eine zweite thermoplastische Folie mit der zweiten Scheibe 4 verbunden ist, und wobei eine dazwischenliegende thermoplastische Rahmenfolie einen Ausschnitt aufweist, in welchen das zugeschnittene Funktionselement 10 passgenau eingelegt ist. Die dritte thermoplastische Folie bildet also gleichsam eine Art Passepartout für das Funktionselement 10, welches somit rundum in thermoplastisches Material eingekapselt und dadurch geschützt ist. Diese Einbettung des PDLC-Elements in eine Verbundscheibe 2 ist dem Fachmann wohlbekannt, so dass sich eine genaue Darstellung erübrigt. Wie dem Fachmann weiterhin bekannt ist, umfasst das PDLC-Element in aller Regel eine aktive Schicht zwischen zwei Flächenelektroden und zwei Trägerfolien. Die aktive Schicht enthält eine Polymermatrix mit darin dispergierten Flüssigkristallen, die sich in Abhängigkeit der an die Flächenelektroden angelegten elektrischen Spannung S ausrichten, wodurch die optischen Eigenschaften geregelt werden können.

Das Funktionselement 10 ist hier beispielsweise durch Isolierungslinien in neun Segmente 10.1 unterteilt. Die Segmente 10.1 sind streifenartig ausgebildet. Die Isolierungslinien zwischen den Segmenten 10.1 weisen beispielsweise eine Breite von 40 µm (Mikrometer) bis 50 µm auf. Sie können beispielsweise mittels eines Lasers in die vorgefertigte Mehrschichtfolie eingebracht worden sein.

Die Isolierungslinien trennen insbesondere die Flächenelektroden des Funktionselements 10 in voneinander isolierte Streifen, die jeweils über einen separaten elektrischen Anschluss verfügen. So sind die Segmente 10.1 unabhängig voneinander schaltbar.

Die jeweiligen Flächenelektroden der Segmente 10.1 sind auf der einen Seite jeweils einzeln über Abschnitte von Sammelleitern 28 (in Figur 1 links dargestellt) und auf der gegenüberliegenden Seite über einen gemeinsamen Sammelleiter 28 (in Figur 1 rechts dargestellt) kontaktiert. Zum Anlegen einer Spannung an die jeweils einzelnen Sammelleiter-Abschnitte der neuen Segmente 10.1 und dem einen gemeinsamen Sammelleiter 28 werden somit hier beispielsweise zehn unabhängige elektrische Leitungsverbindungen benötigt.

Die Verbundscheibe 1 weist weiterhin ein Flachbandkabel 11 auf. Die Sammelleiter 28 der Segmente 10.1 des Funktionselements 10 sind jeweils beispielsweise über elektrische Leiterdrähte 27 mit dem Flachbandkabel 11 elektrisch leitend verbunden. Eine sichere elektrisch leitende Verbindung wird dabei bevorzugt durch Verlöten der Verbindung erzielt.

Das Funktionselement 2 ist ein PDLC-Funktionselement, das als ein regelbarer Sonnen- oder Sichtschutz fungiert. Der Fahrer oder ein anderer Fahrzeuginsasse kann abhängig vom Sonnenstand das PDLC-Funktionselement beispielsweise über ein Touch-Bedienelement bedienen.

Zur Ansteuerung der neun unabhängigen Segmenten 10.1 mit einem gemeinsamen Gegenpol weist das Flachbandkabel 11 beispielsweise zehn voneinander elektrisch isolierte elektrische Leiterbahnen 12 auf.

Es versteht sich, dass das Flachbandkabel 11 den jeweiligen Gegebenheiten der tatsächlichen Verwendung angepasst werden kann und beispielsweise sich über zwei, drei oder vier Ebenen erstrecken kann. Alternativ oder in Kombination können mehr oder weniger Leiterbahnen pro Ebenen nebeneinander angeordnet werden.

Wie in der schematischen Einsetzung von Figur 3B veranschaulicht, ist das Flachbandkabel 11 teilweise in die Verbundscheibe 2 einlaminiert und zwischen den beiden Scheiben 3, 4 aus der Verbundscheibe 2 herausgeführt. In der Figur 3B ist das Flachbandkabel 11 um die Seitenfläche 2.1 der zweiten Scheibe 4 herumgeführt und auf der Oberfläche IV der zweiten Scheibe 4 angeordnet. Dazu kann die zweite Scheibe 4 im Austrittsbereich eine Ausnehmung aufweisen, beispielsweise durch einen geschliffenen Bereich (hier nicht dargestellt).

Das Flachbandkabel 11 weist einen ersten Anschlussbereich 6 und einen zweiten Anschlussbereich 8 auf, wobei sich entlang einer Erstreckungsrichtung des Flachbandkabels 11 der erste Anschlussbereich 6 an einem ersten Ende 5 und der zweite Anschlussbereich 8 an einem zweiten Ende 7 des Flachbandkabels 11 befinden. Das Flachbandkabel 11 weist im ersten Anschlussbereich 6 in ein Elektrodenfeld mit zehn Anschlusselektroden 15 zur elektrischen (z.B. galvanischen) Kontaktierung des Funktionselements 10 auf.

Das Flachbandkabel 11 weist an seinem zweiten Ende 7 einen zweiten Anschlussbereich 8 auf. Dieser ist über ein Verbindungselement 14 mit einem Rundkabel 26 derart verbunden, dass beispielsweise die einzelnen Leiterbahnen 12 und die beiden Enden der Zusatzleiterbahnen 13a, 13b mit jeweils einzelnen Adern des Rundkabels 26 elektrisch kontaktiert sind. Am dem Verbindungselement 14 abgewandten Ende des Rundkabels 26 kann beispielsweise Anschlusselement 17, beispielsweise ein Stecker oder eine Buchse zur weiteren elektrischen Verbindung, beispielsweise mit einer Boardelektronik angeordnet sein.

Das Verbindungselement 14 und/oder das Anschlusselement 17 können beispielsweise innerhalb eines Schutzgehäuses 19 angeordnet sein, die das Verbindungselement 17 und/oder das Anschlusselement 17 vor mechanischer Beschädigung während des Laminiervorgangs schützen.

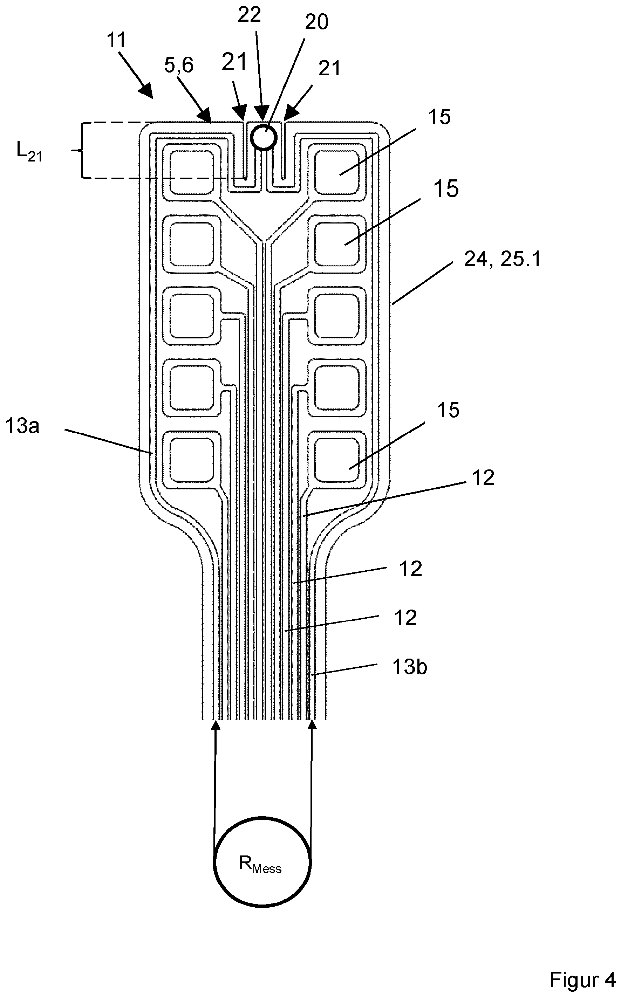

Figur 4 zeigt eine schematische Darstellung des ersten Anschlussbereichs 6 eines alternativen erfindungsgemäßen Flachbandkabels 11. Das erfindungsgemäße Flachbandkabel 11 entspricht im Wesentlichen dem Flachbandkabel 11, wie es in den Figuren 1A und 1B dargestellt ist, so dass hier nur auf die Unterschiede eingegangen wird und ansonsten auf die Beschreibung zu den Figuren 1A und 1B verwiesen wird. Es versteht sich, dass das alternative Flachbandkabel 11 der Figur 4 auch in einer Anschlussanordnung 1 nach den Figuren 3A-C verwendet werden kann. Darüber hinaus kann das erfindungsgemäße Verfahren zur Temperaturmessung und das nicht beanspruchte Verfahren zur **Defek**terkennung (Brucherkennung und Kurzschlusserkennung) ebenfalls mit dem Flachbandkabel 11 nach Figur 4, wie in der Beschreibung zu den Figuren 1A und 1B dargelegt, durchgeführt werden. Beim Flachbandkabel 11 nach Figur 4 befindet sich der erste Anschlussbereich 6 an einem ersten Ende 5 des Flachbandkabels 11 und weist zehn Anschlusselektroden 15 auf, die auf einer Seite der Trägerfolie 24 in zwei symmetrischen Reihen angeordnet sind. Jede Anschlusselektrode 15 ist mit einer Leiterbahn 12 elektrisch verbunden.

Das Flachbandkabel 11 nach Figur 4 weist am ersten Ende 5 einen Temperatursensor 20 auf, der durch zwei Zusatzleiterbahnen 13a, 13b elektrisch kontaktiert wird. Der Temperatursensor 20 ist in einem Abschnitt 22 des Flachbandkabels 11 angeordnet, in dem die Trägerfolie 24 zwei Einschnitte 21 aufweist, die sich ausgehend vom Rand der Trägerfolie 24 im Wesentlichen orthogonal in Richtung des Inneren der Trägerfolie 24 erstrecken. Dazu sind die Zusatzleiterbahnen 13a, 13b schleifenförmig um die Einschnitte 21 herumgeführt. Die Länge L₂₁ der Einschnitte 21 beträgt beispielsweise etwa 8 mm, die Breit etwa 0,5 mm.

Durch die Einschnitte 21 ist der Abschnitt 22 mit dem Temperatursensor 20 besonders flexibel. Dies hat den besonderen Vorteil, dass sich der im Vergleich zum übrigen Anschlussbereich 6 üblicherweise dickere Temperatursensor 20 besonders gut in eine Verbundscheibe 2 einlaminieren lässt.

Der besondere Vorteil der Erfindung besteht in einem einzelnen erfindungsgemäßen Flachbandkabel 11 welches zwei Funktionalitäten in einem Bauelement bereitstellt: 1) Die Versorgung eines elektrischen Funktionselement 10 einer aktiven Verglasung mit einer Steuerspannung S, sowie 2) einer Temperaturmessung der aktiven Verglasung und angepassten Steuerung des elektrischen Funktionselements 10.

Diese Temperaturmessung ist für elektrische Funktionselemente 10 in aktiven Verglasungen besonders wichtig, da oftmals die optischen Leistungen (Transparenzänderung, Streuverhalten, Schaltgeschwindigkeit, etc.) von der Temperatur der Verglasung abhängen. Eine elektronische Stromversorgung durch eine entsprechend programmierte oder konfigurierte elektronische Steuereinheit kann die Ergebnisse der Temperaturmessung nutzen und die Steuerspannung S entsprechend anpassen, um die optischen Leistungen zu regulieren oder einfach die Steuerspannung S unterbrechen, wenn die Temperatur T zu hoch oder zu niedrig ist, und so das elektrische Funktionselement 10 der aktiven Verglasung vor möglichen Schäden zu schützen.

### Bezugszeichenliste

- 1: Anschlussanordnung
- 2: Verbundscheibe
- 2.1: Seiten- oder Austrittsfläche
- 3: erste Scheibe
- 4: zweite Scheibe
- 5: erstes Ende
- 6: erster Anschlussbereich
- 7: zweites Ende
- 8: zweiter Anschlussbereich
- 9: Zwischenschicht
- 10: elektrisches Funktionselement
- 10.1: Segmente
- 11: Flachbandkabel
- 12: Leiterbahn
- 13a, 13b: Zusatzleiterbahn
- 14: Verbindungsbereich
- 15: Anschlusselektrode
- 17: Buchse oder Stecker
- 19: Schutzgehäuse
- 20: Temperatursensor
- 21: Einschnitt
- 22: Abschnitt der Trägerfolie 24
- 24: Trägerfolie
- 25.1: Deckfolie
- 25.2: Isolationsfolie
- 26: Rundkabel
- 27: Leiterdraht
- 28: Sammelleiter
- 29: Austrittsstelle
- bF: (maximale) Breite des Flachbandkabels 11
- bL: (maximale) Breite der Leiterbahn 12
- dF: (maximale) Dicke des Flachbandkabels 11
- dL: (maximale) Dicke der Leiterbahn 12
- E1: Ebene 1
- L₂₁: Länge des Einschnitts 21
- T: Temperatur
- Z: Bruchbereich
- A-A': Schnittlinie
- I, IV: Oberfläche

## Patentansprüche

1. Flachbandkabel (11) aufweisend eine Trägerfolie (24) mit mindestens einer, bevorzugt mindestens zwei, elektrischen Leiterbahnen (12), wobei die Trägerfolie (24) an einem ersten Ende (5) einen ersten Anschlussbereich (6) und an einem zweiten Ende (7) einen zweiten Anschlussbereich (8) aufweist, wobei der erste Anschlussbereich (6) zwischen zwei Scheiben (3, 4) einer Verbundscheibe (2) anordenbar ist und der zweite Anschlussbereich (8) zwischen den beiden Scheiben (3, 4) aus der Verbundscheibe (2) herausführbar ist, und wobei die mindestens eine elektrische Leiterbahn (12) im ersten Anschlussbereich (6) ein elektrisches Funktionselement (10) elektrisch kontaktieren kann,
dadurch charakterisiert, dass
die Trägerfolie (24) einen Temperatursensor (20) und zwei Zusatzleiterbahnen (13a,13b) aufweist und die Zusatzleiterbahnen (13a, 13b) den Temperatursensor (20) elektrisch kontaktieren, so dass ein ohmscher Widerstandwert R_{Mess} zwischen den Zusatzleiterbahnen (13a, 13b) messbar ist.

2. Flachbandkabel (11) nach Anspruch 1, wobei der Temperatursensor (20) am ersten Anschlussbereich (6) der Trägerfolie (24) angeordnet ist.

3. Flachbandkabel (11) nach Anspruch 1 oder 2, wobei der Temperatursensor (20) und/oder die Zusatzleiterbahnen (13a, 13b) im Randbereich der Trägerfolie (24) angeordnet sind.

4. Flachbandkabel (11) nach einem der Ansprüche 1 bis 3, wobei die erste Zusatzleiterbahn (13a), der Temperatursensor (20) und die zweite Zusatzleiterbahn (13b) schleifenförmig und bevorzugt im Wesentlichen U-förmig um den ersten Anschlussbereich (6) herumgeführt sind.

5. Flachbandkabel (11) nach einem der Ansprüche 1 bis 4, wobei mindestens eine elektrische Leiterbahn (12) und die Zusatzleiterbahnen (13a, 13b) in einer Ebene (E1) nebeneinander oder in mindestens zwei, bevorzugt in genau zwei oder genau drei oder genau vier, Ebenen (E1, E2) übereinander angeordnet sind.

6. Flachbandkabel (11) nach einem der Ansprüche 1 bis 5, wobei mindestens eine elektrische Leiterbahn (12) auf einer ersten Oberfläche einer elektrisch isolierenden Trägerfolie (24) und mindestens eine weitere Leiterbahn auf der zweiten Oberfläche der Trägerfolie (24) angeordnet ist.

7. Flachbandkabel (11) nach einem der Ansprüche 1 bis 6, wobei die mindestens eine elektrische Leiterbahn (12), die Zusatzleiterbahnen (13a, 13b) und/oder der Temperatursensor (20) mit der ersten bzw. zweiten Oberfläche der Trägerfolie (24) fest verbunden ist.

8. Flachbandkabel (11) nach einem der Ansprüche 1 bis 7, wobei der Temperatursensor (20) ein Widerstandselement oder Widerstandsthermometer, bevorzugt ein Messwiderstand oder ein Thermistor, insbesondere ein Platin-Widerstand, ein Nickel-Widerstand, ein Heißleiter-Bauelement oder ein Kaltleiter-Bauelement ist.

9. Flachbandkabel (11) nach einem der Ansprüche 1 bis 8, wobei die Trägerfolie (24) jeweils einen Einschnitt (21) oder eine Ausnehmung auf beiden Seiten des Temperatursensors (20) aufweist, welche sich vom Rand der Trägerfolie (24), bevorzugt im Wesentlichen geradlinig und besonders bevorzugt unter einem 90°-Winkel, ins Innere der Trägerfolie (24) erstreckt.

10. Anschlussanordnung (1), aufweisend:
- eine Verbundscheibe (2) aus einer ersten Scheibe (3) und einer zweiten Scheibe (4), die über mindestens eine thermoplastische Zwischenschicht (9) flächenmäßig miteinander verbunden sind,
- ein elektrisches Funktionselement (10), welches zwischen den beiden Scheiben (3, 4) angeordnet ist,
- ein Flachbandkabel (11) gemäß den Ansprüchen 1 bis 9, wobei der erste Anschlussbereich (6) zwischen den beiden Scheiben (3, 4) angeordnet ist und der zweite Anschlussbereich (8) zwischen den beiden Scheiben (3, 4) aus der Verbundscheibe (2) herausgeführt ist, und wobei die mindestens eine elektrische Leiterbahn (12) im ersten Anschlussbereich (6) das elektrische Funktionselement (10) elektrisch kontaktiert.

11. Anschlussanordnung (1) nach Anspruch 10, wobei das elektrische Funktionselement (10) ein PDLC-, Guest-Host- oder ein elektrochromes Funktionselement, eine LED- oder OLED-Lichtquelle, ein Photovoltaik-Modul, oder eine Antenne enthält oder daraus besteht.

12. Steuerungssystem, aufweisend;
- eine Anschlussanordnung (1) nach Anspruch 10 oder 11 und
- eine elektrische Steuereinheit, die mit den Zusatzleiterbahnen (13a, 13b) und der mindestens einen elektrischen Leiterbahn (12) elektrisch verbunden ist,
wobei die elektrische Steuereinheit dazu ausgebildet ist,
- einen ohmschen Widerstandswert R_{Mess} der Zusatzleiterbahnen (13a, 13b) mit dazwischen angeordnetem Temperatursensor (20) zu messen und
- in Abhängigkeit des gemessenen Widerstandswerts R_{Mess}
o das elektrische Funktionselement (10) zu steuern und/oder
o einen Defekt im Flachbandkabel (11) zu detektieren.

13. Verfahren zur Temperaturmessung, wobei
a) ein Flachbankkabel (11) nach einem der Ansprüche 1 bis 9, eine Anschlussanordnung (1) nach Anspruch 10 oder 11 oder ein Steuerungssystem nach Anspruch 12 bereitgestellt wird,
b) der ohmsche Widerstand zwischen den Enden der Zusatzleiterbahnen (13a, 13b) mit dazwischen angeordnetem Temperatursensor (20) gemessen wird, wobei der gemessene Widerstandwert R_{Mess} einer Temperatur T am Temperatursensor (20) entspricht.

14. Verfahren nach Anspruch 13, wobei die Steuerspannungen S des mit dem Flachbandkabels (11) elektrisch verbunden elektrischen Funktionselement (10) von der Temperaturmessung in Schritt b) abhängig gewählt werden.

15. Verfahren nach Anspruch 13 oder Anspruch 14, wobei in einem Verfahrensschritt c) der gemessene Widerstandwert R_{Mess} mit einem oberen Referenz-Widerstandswert R_{Ref_o} und/oder mit einem unteren Referenz-Widerstandswert R_{Ref_u} verglichen wird und ein Überschreiten des Referenz-Widerstandswerts R_{Ref_o} und/oder ein Unterschreiten des unteren Referenz-Widerstandswerts R_{Ref_u} einem Defekt im Flachbandkabel (11) entspricht, wobei bevorzugt der Schritt c) durchgeführt wird, bevor und/oder nachdem das Flachbandkabel (11) in einer Anschlussanordnung (1) angeordnet wird.

16. Verwendung eines Flachbankkabel (11) nach einem der Ansprüche 1 bis 9, einer Anschlussanordnung (1) nach Anspruch 10 oder 11 oder eines Steuerungssystems nach Anspruch 12 in einer Gebäudeverglasung oder Fahrzeugverglasung, insbesondere in Windschutzscheibe, Seitenscheibe, Heckscheibe oder Dachscheibe eines Kraftfahrzeugs und bevorzugt mit einem elektrischen Funktionselement (10), welches ein SPD-, PDLC-, Guest-Host- oder ein elektrochromes Funktionselement, eine LED- oder OLED-Lichtquelle, ein Photovoltaik-Modul, oder eine Antenne enthält oder daraus besteht.

17. Verwendung eines Flachbankkabel (11) nach einem der Ansprüche 1 bis 9, einer Anschlussanordnung (1) nach Anspruch 10 oder 11 oder eines Steuerungssystems nach Anspruch 12 zur Temperaturmessung oder zur kombinierten Temperaturmessung und Defekterkennung.

## Claims

1. Ribbon cable (11), having:
a carrier film (24) with at least one, and preferably at least two, electrical conductor tracks (12), wherein the carrier film (24) has a first connector region (6) at a first end (5) and a second connector region (8) at a second end (7), wherein the first connector region (6) can be arranged between two panes (3, 4) of a laminated pane (2), and the second connector region (8) can be led out of the laminated pane (2) between the two panes (3, 4), and wherein the at least one electrical conductor track (12) in the first connector region (6) can make electrical contact with an electrical functional element (10),
**characterized in that** the carrier film (24) has a temperature sensor (20) and two auxiliary conductor tracks (13a, 13b), and the auxiliary conductor tracks (13a, 13b) make electrical contact with the temperature sensor (20), so that an ohmic resistance value R_{Mess} can be measured between the auxiliary conductor tracks (13a, 13b).

2. Ribbon cable (11) according to claim 1, wherein the temperature sensor (20) is arranged at the first connector region (6) of the carrier film (24).

3. Ribbon cable (11) according to claim 1 or 2, wherein the temperature sensor (20) and/or the auxiliary conductor tracks (13a, 13b) are arranged in the marginal region of the carrier film (24).

4. Ribbon cable (11) according to one of claims 1 through 3, wherein the first auxiliary conductor track (13a), the temperature sensor (20), and the second auxiliary conductor track (13b) are routed in a loop shape and, preferably, substantially U-shape around the first connector region (6).

5. Ribbon cable (11) according to one of claims 1 through 4, wherein at least one electrical conductor track (12) and the auxiliary conductor tracks (13a, 13b) are arranged in one plane (E1) next to one another or in at least two, and preferably in exactly two or exactly three or exactly four, planes (E1, E2) one above the other.

6. Ribbon cable (11) according to one of claims 1 through 5, wherein at least one electrical conductor track (12) is arranged on a first surface of an electrically-insulating carrier film (24), and at least one further conductor track is arranged on the second surface of the carrier film (24).

7. Ribbon cable (11) according to one of claims 1 through 6, wherein the at least one electrical conductor track (12), the auxiliary conductor tracks (13a, 13b), and/or the temperature sensor (20) is fixedly connected to the first or second surface of the carrier film (24).

8. Ribbon cable (11) according to one of claims 1 through 7, wherein the temperature sensor (20) is a resistance element or resistance thermometer, and preferably a measuring resistor or a thermistor - in particular, a platinum resistor, a nickel resistor, a hot conductor component, or a cold conductor component.

9. Ribbon cable (11) according to one of claims 1 through 8, wherein the carrier film (24) has a respective notch (21) or recess on both sides of the temperature sensor (20), which extends from the margin of the carrier film (24), preferably substantially in a straight line and particularly preferably at a 90° angle, into the interior of the carrier film (24).

10. Connector assembly (1), having:
- a laminated pane (2) comprising a first pane (3) and a second pane (4), which are bonded to one another in terms of surface area via at least one thermoplastic intermediate layer (9),
- an electrical functional element (10), which is arranged between the two panes (3, 4),
- a ribbon cable (11) according to claims 1 through 9, wherein the first connector region (6) is arranged between the two panes (3, 4), and the second connector region (8) is led out of the laminated pane (2) between the two panes (3, 4), and wherein the at least one electrical conductor track (12) in the first connector region (6) makes electrical contact with the electrical functional element (10).

11. Connector assembly (1) according to claim 10, wherein the electrical functional element (10) contains or consists of a PDLC, guest-host, or an electrochromic functional element, an LED or OLED light source, a photovoltaic module, or an antenna.

12. Control system, having:
- a connector assembly (1) according to claim 10 or 11, and
- an electrical control unit electrically connected to the auxiliary conductor tracks (13a, 13b) and the at least one electrical conductor track (12),
wherein the electrical control unit is formed for
- measuring an ohmic resistance value R_{Mess} of the auxiliary conductor tracks (13a, 13b) with a temperature sensor (20) arranged in-between, and
- as a function of the measured resistance value R_{Mess},
○ controlling the electrical functional element (10) and/or
○ detecting a defect in the ribbon cable (11).

13. Method for temperature measurement, wherein
a) a ribbon cable (11) according to one of claims 1 through 9, a connector assembly (1) according to claim 10 or 11, or a control system according to claim 12 is provided,
b) the ohmic resistance between the ends of the auxiliary conductor tracks (13a, 13b) with a temperature sensor (20) arranged in-between is measured, wherein the measured resistance value R_{Mess} corresponds to a temperature T at the temperature sensor (20).

14. Method according to claim 13, wherein the control voltages S of the electrical functional element (10) electrically connected to the ribbon cable (11) are selected depending upon the temperature measurement in step b).

15. Method according to claim 13 or claim 14, wherein, in a method step c), the measured resistance value R_{Mess} is compared with an upper reference resistance value R_{Ref_o} and/or with a lower reference resistance value R_{Ref_u}, and exceeding the reference resistance value R_{Ref_o} and/or falling below the lower reference resistance value R_{Ref_u} corresponds to a defect in the ribbon cable (11), wherein preferably step c) is carried out before and/or after the ribbon cable (11) is arranged in a connector assembly (1).

16. Use of a ribbon cable (11) according to one of claims 1 through 9, a connector assembly (1) according to claim 10 or 11, or a control system according to claim 12 in a building glazing or vehicle glazing, and in particular in a windshield, side pane, rear pane, or roof pane of a motor vehicle and preferably with an electrical functional element (10) which contains or consists of an SPD, PDLC, guest-host, or an electrochromic functional element, an LED or OLED light source, a photovoltaic module, or an antenna.

17. Use of a ribbon cable (11) according to one of claims 1 through 9, a connector assembly (1) according to claim 10 or 11, or a control system according to claim 12 for temperature measurement or for combined temperature measurement and defect detection.

## Revendications

1. Câble ruban (11), comprenant:
un film support (24) comportant au moins une, et de préférence au moins deux, pistes conductrices électriques (12), le film support (24) présentant une première zone de connexion (6) à une première extrémité (5) et une deuxième zone de connexion (8) à une deuxième extrémité (7), la première zone de connexion (6) pouvant être disposée entre deux vitres (3, 4) d'une vitre feuilletée (2), et la deuxième zone de connexion (8) peut être amenée à l'extérieur de la vitre feuilletée (2) entre les deux vitres (3, 4), et dans lequel la au moins une piste conductrice électrique (12) située dans la première zone de connexion (6) peut établir un contact électrique avec un élément fonctionnel électrique (10),
**caractérisé en ce que** le film support (24) comporte un capteur de température (20) et deux pistes conductrices auxiliaires (13a, 13b), et les pistes conductrices auxiliaires (13a, 13b) établissent un contact électrique avec le capteur de température (20), de sorte qu'une valeur de résistance ohmique R_{Mess} puisse être mesurée entre les pistes conductrices auxiliaires (13a, 13b).

2. Câble ruban (11) selon la revendication 1, dans lequel le capteur de température (20) est disposé au niveau de la première zone de connexion (6) du film support (24).

3. Câble ruban (11) selon la revendication 1 ou 2, dans lequel le capteur de température (20) et/ou les pistes conductrices auxiliaires (13a, 13b) sont disposés dans la zone marginale du film support (24).

4. Câble ruban (11) selon l'une des revendications 1 à 3, dans lequel la première piste conductrice auxiliaire (13a), le capteur de température (20) et la deuxième piste conductrice auxiliaire (13b) sont acheminées en formant une boucle et, de préférence, sensiblement en forme de U autour de la première zone de connexion (6).

5. Câble ruban (11) selon l'une des revendications 1 à 4, dans lequel au moins une piste conductrice électrique (12) et les pistes conductrices auxiliaires (13a, 13b) sont disposées dans un même plan (E1) les unes à côté des autres ou dans au moins deux, et de préférence exactement deux, exactement trois ou exactement quatre plans (E1, E2) superposés.

6. Câble ruban (11) selon l'une des revendications 1 à 5, dans lequel au moins une piste conductrice électrique (12) est disposée sur une première surface d'un film support électriquement isolant (24), et au moins une autre piste conductrice est disposée sur la deuxième surface du film support (24).

7. Câble ruban (11) selon l'une des revendications 1 à 6, dans lequel la au moins une piste conductrice électrique (12), les pistes conductrices auxiliaires (13a, 13b) et/ou le capteur de température (20) sont reliés de manière fixe à la première ou à la deuxième surface du film support (24).

8. Câble ruban (11) selon l'une des revendications 1 à 7, dans lequel le capteur de température (20) est un élément résistif ou un thermomètre à résistance, et de préférence une résistance de mesure ou une thermistance - en particulier, une résistance en platine, une résistance en nickel, un composant conducteur chaud ou un composant conducteur froid.

9. Câble ruban (11) selon l'une des revendications 1 à 8, dans lequel le film support (24) présente, de part et d'autre du capteur de température (20), une encoche (21) ou un évidement respectif qui s'étend depuis le bord du film support (24), de préférence sensiblement en ligne droite et de manière particulièrement préférée à un angle de 90°, vers l'intérieur du film support (24).

10. Ensemble de connexion (1), comportant:
- une vitre feuilletée (2) comprenant une première vitre (3) et une deuxième vitre (4), qui sont liées l'une à l'autre de manière surfacique par au moins une couche intermédiaire thermoplastique (9),
- un élément fonctionnel électrique (10), qui est disposé entre les deux vitres (3, 4),
- un câble ruban (11) selon les revendications 1 à 9, dans lequel la première zone de connexion (6) est disposée entre les deux vitres (3, 4), et la deuxième zone de connexion (8) est amenée à l'extérieur de la vitre feuilletée (2) entre les deux vitres (3, 4), et dans lequel la au moins une piste conductrice électrique (12) dans la première zone de connexion (6) établit un contact électrique avec l'élément fonctionnel électrique (10).

11. Ensemble de connexion (1) selon la revendication 10, dans lequel l'élément fonctionnel électrique (10) contient ou est constitué d'un PDLC, d'un élément « hôte-invité » ou d'un élément fonctionnel électrochromique, d'une source lumineuse LED ou OLED, d'un module photovoltaïque ou d'une antenne.

12. Système de commande, comprenant:
- un ensemble de connexion (1) selon la revendication 10 ou 11, et
- une unité de commande électrique reliée électriquement aux pistes conductrices auxiliaires (13a, 13b) et à la au moins une piste conductrice électrique (12),
dans lequel l'unité de commande électrique est conçue pour
- mesurer une valeur de résistance ohmique R_{Mess} des pistes conductrices auxiliaires (13a, 13b) à l'aide d'un capteur de température (20) disposé entre celles-ci, et
- en fonction de la valeur de résistance mesurée R_{Mess},
○ commander l'élément fonctionnel électrique (10) et/ou
○ détecter un défaut dans le câble ruban (11).

13. Procédé de mesure de température, dans lequel
a) on prévoit un câble ruban (11) selon l'une des revendications 1 à 9, un ensemble de connexion (1) selon la revendication 10 ou 11, ou un système de commande selon la revendication 12,
b) on mesure la résistance ohmique entre les extrémités des pistes conductrices auxiliaires (13a, 13b) avec un capteur de température (20) disposé entre celles-ci, la valeur de résistance mesurée R_{Mess} correspondant à une température T au niveau du capteur de température (20).

14. Procédé selon la revendication 13, dans lequel les tensions de commande S de l'élément fonctionnel électrique (10) relié électriquement au câble ruban (11) sont sélectionnées en fonction de la mesure de température effectuée à l'étape b).

15. Procédé selon la revendication 13 ou la revendication 14, dans lequel, lors d'une étape c) du procédé, la valeur de résistance mesurée R_{Mess} est comparée à une valeur de résistance de référence supérieure R_{Ref_o} et/ou à une valeur de résistance de référence inférieure R_{Ref_u}, et le dépassement de la valeur de résistance de référence R_{Ref_o} et/ou le fait de passer en dessous de la valeur de résistance de référence inférieure R_{Ref_u} correspond à un défaut du câble ruban (11), l'étape c) étant de préférence réalisée avant et/ou après la mise en place du câble ruban (11) dans un ensemble de connexion (1).

16. Utilisation d'un câble ruban (11) selon l'une des revendications 1 à 9, d'un ensemble de connexion (1) selon la revendication 10 ou 11, ou d'un système de commande selon la revendication 12 dans un vitrage de bâtiment ou un vitrage de véhicule, et en particulier dans un pare-brise, une vitre latérale, vitre arrière ou vitre de toit d'un véhicule automobile, et de préférence avec un élément fonctionnel électrique (10) qui contient ou est constitué d'un SPD, d'un PDLC, d'un « guest-host » ou d'un élément fonctionnel électrochrome, d'une source lumineuse LED ou OLED, d'un module photovoltaïque ou d'une antenne.

17. Utilisation d'un câble ruban (11) selon l'une des revendications 1 à 9, d'un ensemble de connexion (1) selon la revendication 10 ou 11, ou d'un système de commande selon la revendication 12 pour la mesure de la température ou pour la mesure combinée de la température et la détection de défauts.
